# EUROPEAN PATENT SPECIFICATION

(11) **EP 1 133 179 B1**
(45) Date of publication and mention of the grant of the patent: **22.09.2004**
(21) Application number: 01115409.3
(22) Date of filing: 13.12.1996
(51) Int. Cl.: H04N 5/783, H04N 9/87

(54) **Magnetic reproducing apparatus**
Magnetwiedergabegerät
Appareil de reproduction magnétique

(30) Priority: 14.12.1995 JP 34734195; 05.08.1996 JP 22179096; 27.09.1996 JP 27749196
(43) Date of publication of application: 12.09.2001
(62) Divisional of application: 96120089.6
(73) Proprietor: VICTOR COMPANY OF JAPAN, LIMITED, Kanagawa-ku Yokohama (JP)
(72) Inventor: Hirohata, Naoto, Kanagawa-ku, Yokohama (JP); Yamaya, Yuichi, Yokohama (JP)
(74) Representative: Manitz, Finsterwald & Partner

(56) References cited:
- EP-A- 0 270 155
- EP-A- 0 361 819
- EP-A- 0 589 726
- EP-A- 0 618 738
- US-A- 4 510 530
- US-A- 4 672 469
- US-A- 4 780 774
- US-A- 5 416 599

## Description

### BACKGROUND OF THE INVENTION

### 1.FIELD OF THE INVENTION:

The present invention relates generally to a magnetic reproducing apparatus used as a helical scan type video tape recorder (VTR) in which a video signal recorded in a tape type magnetic recording medium at a long time play operation mode according to a phase alternation by line (PAL) or sequential color and memory (SECAM) television method is reproduced at a high speed, and more particularly to a magnetic reproducing apparatus in which a chrominance signal is correctly reproduced and a reproduced image is obtained without any skew or noise.

### PREVIOUSLY PROPOSED ART:

A helical scan type VTR in which a tape type magnetic recording medium (hereinafter, called a magnetic tape) wound on a rotational drum is scanned by a magnetic head attached on the rotational drum, a video signal and an audio signal are recorded on the magnetic tape while forming a prescribed patterned track on the magnetic tape and the video and audio signals are reproduced is well-known.

In this VTR, there are two operation modes. One operation mode is called a standard mode in which recording and reproducing operations are performed on condition that the rotational drum is rotated at a prescribed constant rotational speed and the magnetic tape is run at a standard recording (or reproducing) speed. The other operation mode is called a long time play (LP) mode in which recording and reproducing operations are performed on condition that the magnetic tape is run at a long time recording (or reproducing) speed lower than the standard recording (or reproducing) speed. Therefore, the tape running speed is changeable to select one of these modes, and the video signal can be recorded and reproduced for a standard time or a long time by using the helical scan type VTR.

Also, a special reproducing operation such as a high speed reproducing operation or a still image reproducing operation is performed in the VTR. In the high speed reproducing operation, the video signal is reproduced while the magnetic tape travels at a fast forward speed or a fast reverse speed. In the still image reproducing operation, the travelling of the magnetic tape is momentarily stopped and the same patterned track is repeatedly scanned by the magnetic head to reproduce a still picture recorded in the patterned track.

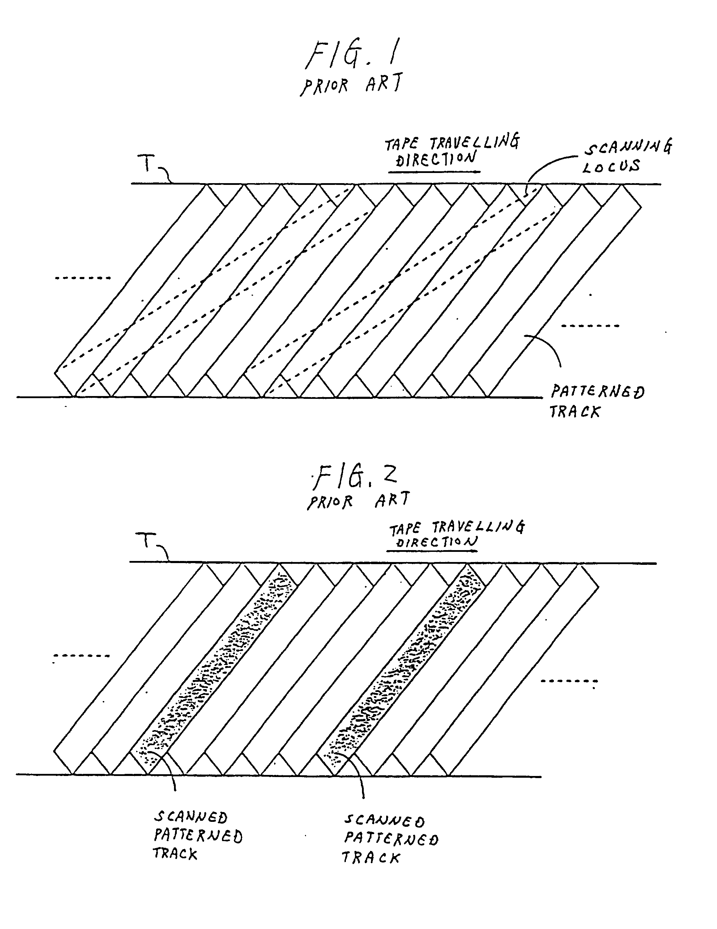

In particular, as shown in Fig. 1, when the magnetic tape is scanned by the magnetic head in the high speed reproducing operation, a scanning locus of the magnetic head on the magnetic tape crosses over a plurality of patterned tracks. Because a pair of magnetic heads opposite to each other on the rotational drum are arranged to be spaced at 180 degrees apart and the magnetic heads have different azimuth angles, when one magnetic head having a particular azimuth angle crosses a pair of patterned tracks adjacent to each other, though a video signal recorded in one patterned track though the magnetic head having the particular azimuth angle is read out through the magnetic head having the particular azimuth angle, any video signal recorded in the other patterned track though the other magnetic head having the other azimuth angle is not read out through the magnetic head having the particular azimuth angle, and a noise occurs in a reproduced image. This noise is called a noise bar.

US-A-4 672 469 shows a video recorder with a special mode processing to avoid shew and phase jumps due to crossing of tracks.

To prevent the occurrence of the noise bar on the reproduced image, a VTR is known from e.g. EP-A-0 589 726 in which a rotation central axis of the rotational drum is inclined and a mechanism for changing a position of a leading portion used to lead a lower end side of the magnetic tape is provided to incline the rotational drum in the special reproducing operation. Therefore, because the inclination of the rotational drum and the positional change of the leading portion are performed in the special reproducing operation, as shown in Fig. 2, a scanning locus of one magnetic head on the magnetic tape passes through only one patterned track. Therefore, any noise bar does not occur on a reproduced image. Also, as shown in Fig. 2, a plurality of patterned tracks are scanned by the magnetic head one after another while the magnetic head jumps over a plurality of other patterned tracks not scanned by the magnetic head.

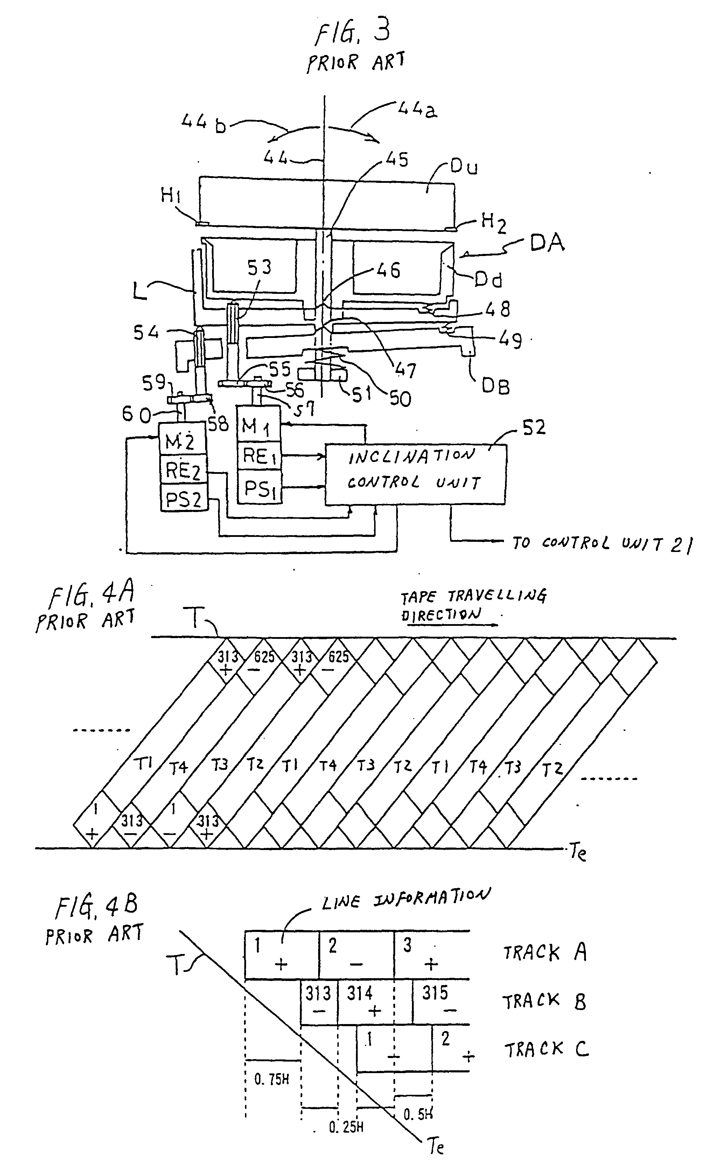

A mechanism for inclining a central axis of a rotational drum and changing a position of a leading portion used to lead a reference end side of the magnetic tape to make a scanning locus of a magnetic head pass through each patterned recording track formed on the magnetic tape is shown in Fig. 3.

As shown in Fig. 3, a magnetic tape (not shown) on which a plurality of video signals are recorded is wounded on a portion of a peripheral surface of a rotational drum composed of an upper drum Du and a lower drum Dd, the magnetic tape travels at a high speed N (N is an integral number) times as fast as a recording speed, a pair of rotational magnetic heads H1 and H2 are arranged opposite to each other on the upper drum Du to be spaced at 180 degrees apart, and the video signals are read out from the magnetic tape one after another while alternately passing through the rotational magnetic heads H1 and H2.

The magnetic tape is wound on the upper drum Du and the lower drum Dd rotated at a prescribed rotational speed at a central angle of 180 degrees or more along a leading portion G arranged on an upper end side of a lead ring Lr. As a drum motor for this mechanism, it is applicable that a motor of which a rotor is fixed to the upper drum Du be used.

A drum structural body DA composed of the upper drum Du, the lower drum Dd and the lead ring Lr is supported on a drum base DB. The upper drum Du is supported by a bearing (not shown) arranged around a central axis 44 of the drum structural body DA on condition that the upper drum Du rotates around the central axis 44 of the drum structural body DA. The lower drum Dd is fixed to the central axis 44 of the drum structural body DA. The lead ring Lr functioning as a leading portion for a reference end side Te of the magnetic tape T shown in Fig. 4A is separated from the lower drum Dd, and the lead ring Lr is adjacent to a peripheral portion of the lower drum Dd and is arranged on the drum base DB. The lead ring Lr is supported at a rotation supporting point 47 of the drum base DB on condition that the lead ring Lr rotates around the central axis 44 of the drum structural body DA. Also, a compressed spring 49 is arranged between the lead ring Lr and the drum base DB.

Also, the lower drum Dd is supported at a rotation supporting point 46 of the leading ring Lr on condition that the lower drum Dd rotates around the central axis 44 of the drum structural body DA. A compressed spring 48 is arranged between the lead ring Lr and the lower drum Dd. A lower portion of a rotation axis 45 of the drum structural body DA along the central axis 44 penetrates through a penetrating hole of the drum base DB, and a spring bracket 51 is fixed to a lower end portion of the rotation axis 45. Also, a plate spring 50 is arranged between the spring bracket 51 and a lower surface of the drum base DB. The drum structural body DA is connected to the drum base DB while the springs 48 to 50 press the drum structural body DA toward the drum base DB, and the drum structural body DA rotated around the central axis 44 can be inclined in a direction 44a or 44b.

A screw 53 meshes with the lead ring Lr, and a screw 54 meshes with the drum base DB. A top end of the screw 53 is attached to a lower surface of the lower drum Dd, and a top end of the screw 54 is attached to a lower surface of the lead ring Lr. When the screw 53 is rotated to advance the screw 53 to the lower drum Dd or retreat from the lower drum Dd, the lower drum Dd pressed by the screw 53 is inclined while maintaining a position of the rotational supporting point 46, so that the rotation axis 45 of the drum structural body DA is inclined in the direction 44a or 44b. Also, when the screw 54 is rotated to advance the screw 54 to the lead ring Lr or retreat from the lead ring Lr, the lead ring Lr pressed by the screw 54 is inclined while maintaining a position of the rotational supporting point 47.

A rotation power provided by a geared motor M1 is transferred to the screw 53 through a rotation axis 57, a gear 56 and a gear 55, and the screw 53 is rotated. Also, a rotation power provided by a geared motor M2 is transferred to the screw 54 through a rotation axis 60, a gear 59 and a gear 58, and the screw 54 is rotated. A rotational direction and a rotation amount of each of the geared motors M1 and M2 are determined under the control of an inclination control unit 52 on condition that the inclination of the rotation axis 45 of the drum structural body DA and the inclination of the lead ring Lr are set to a prescribed condition, that is, a pattern of a scanning locus drawn on the magnetic tape T by the rotational magnetic head H1 or H2 is set to a pattern determined by a travelling direction of the magnetic tape T and a travelling speed of the magnetic tape T.

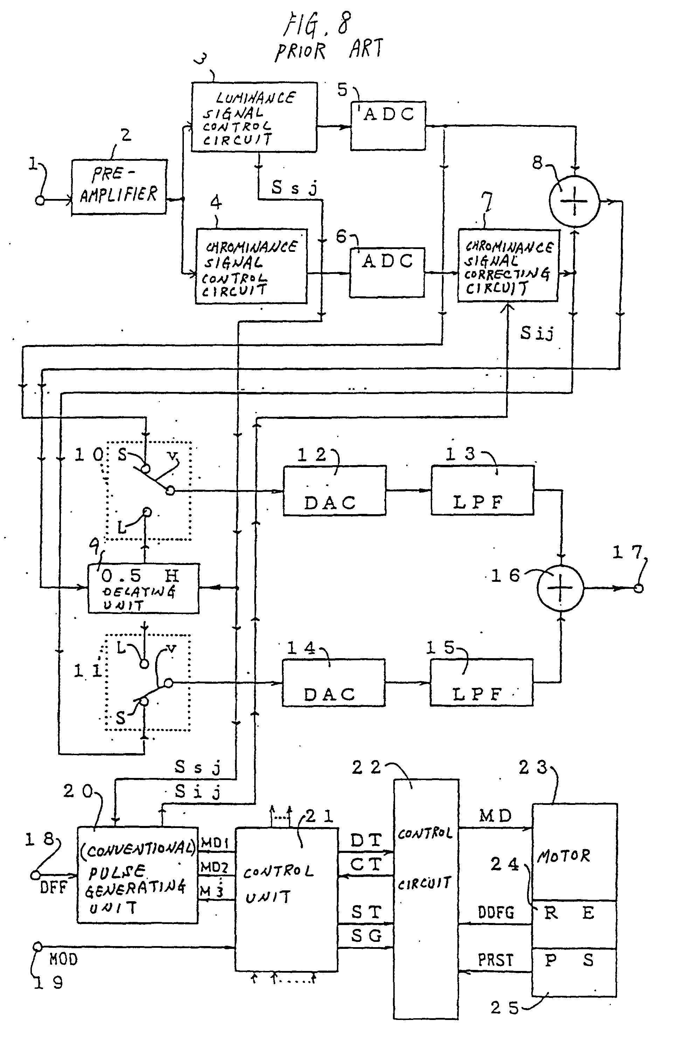

To operate the inclination control unit 52, the inclination control unit 52 receives VTR recording or reproducing mode information transmitted from a control unit 21 (refer to Fig. 8), output signals transmitted from rotary encoders RE1 and RE2 which are attached to the geared motors M1 and M2 and output signals transmitted from positional sensors PS1 and PS2 which are attached to the geared motors M1 and M2. As the positional sensors PS1 and PS2, a system in which a shielding plate having a circular arc shape is moved in an optical path formed by an emitter and a light-intercepting device opposite to each other is available. In this case, when the shielding plate is placed out of the optical path, a signal is output from each of the positional sensors PS1 and PS2 and is used as information indicating a reference position of the rotation axis 45 of the drum structural body DA or information indicating a reference position of the lead ring Lr.

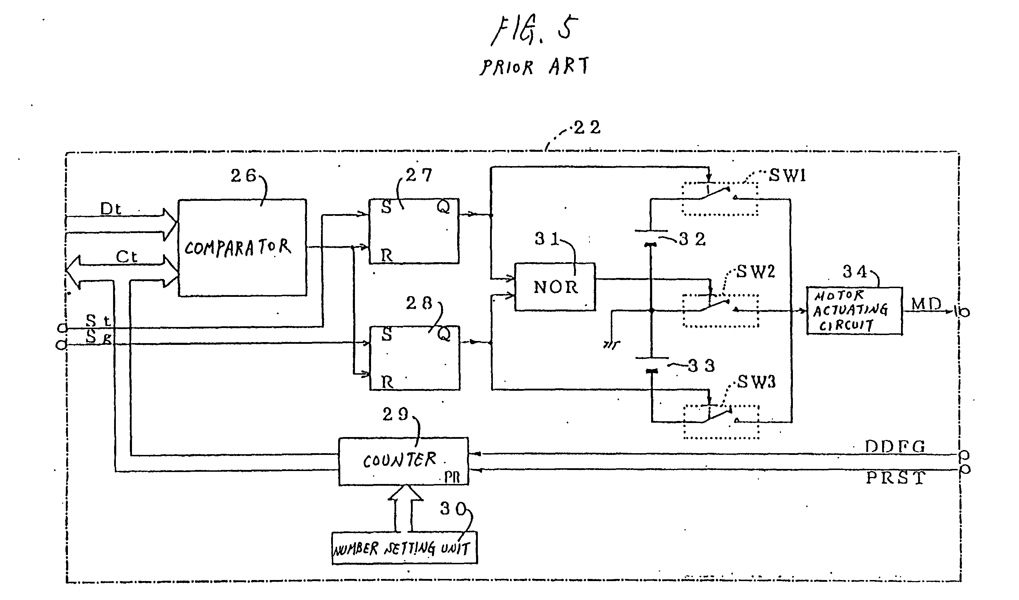

Also, when a rotational degree of the shielding plate from its reference position in each of the positional sensors PS1 and PS2 is detected by measuring the number of pulses output from each of the rotary encoders RE1 and RE2, an inclination direction and an inclination degree from a reference position of the rotational axis 45 of the drum structural body DA and an inclination direction and an inclination degree from a reference position of the lead ring Lr can be obtained. Therefore, a digital signal processing circuit having a counter and a comparator can be used as the inclination control unit 52. An example of a configuration of the inclination control unit 52 is shown in Fig. 5. The explanation of the configuration and operation in the inclination control unit 52 shown in Fig. 5 is omitted.

In cases where a series of PAL type television signals are recorded on the magnetic tape T in the long time play mode, a series of patterned tracks shown in Fig. 4A is formed on the magnetic tape T. Each frame of PAL type television signal is expressed by a scanning line number of 625 and 50 fields and is recorded on the magnetic tape T in a 4-field sequence pattern. Each sequence pattern corresponds to one track T1, T2, T3 or T4. In this case, as shown in Fig. 4B, a pair of patterned tracks adjacent to each other shift each other by 0.75 H (1 H denotes a width of one piece of line information). Therefore, each pair of pieces of line information (ranging from a pair of pieces of first line information for the first scanning line to a pair of pieces of 625-th line information for the 625-th scanning line) in a pair of tracks having the same azimuth (for example, tracks A and C) shift each other by 0.5 H. Because a pair of horizontal synchronizing signals for each pair of pieces of line information in a pair of tracks having the same azimuth shift each other by 0.5 H because of the shift of each pair of pieces of line information, a skew occurs in a reproduced image each time a track jump of the magnetic head from one track to another track having the same azimuth is performed not to read information from a track having a different azimuth. The shift of 0.5 H is accumulated for each track jump. Therefore, when the track jump is performed two times, the shift of 1 H is accumulated.

Also, a phase of a R-Y axis chrominance signal in the PAL type video signal is inverted every line information of 1 H (or every one horizontal period), and a frequency-modulated chrominance signal (or a color difference signal) in the SECAM method is transmitted every line information of 1 H. This characteristic is called a line alternating property. For example, as shown in Fig. 4B, a phase of a chrominance signal of each piece of line information is indicated by a symbol "+" or "-". Because of the shift of 1 H for the line information, there is a drawback that the chrominance signal is not correctly reproduced, a hue inversion occurs or the reproduced image is decolored.

As shown in Figs. 4A and 4B, in cases where the video signals having the line alternating property according to the PAL or SECAM television method are recorded in the magnetic tape T, pieces of line information corresponding to the scanning lines ranging from the first scanning line to the 313-th scanning line are recorded in the track T1. In cases where a phase of the chrominance signal (or the line information) for the first scanning line is indicated by the symbol "+", a phase "-" of the chrominance signal for the second scanning line, a phase "+" of the chrominance signal for the third scanning line and the like are recorded in the track T1 while alternately changing the polarity of the phase according to the line alternating property. Also, pieces of line information ranging from the line information having the phase "+" for the 313-th scanning line to the line information having the phase "-" for the 625-th scanning line are recorded in the track T2 while alternately changing the polarity of the phase according to the line alternating property, pieces of line information ranging from the line information having the phase "-" for the first scanning line to the line information having the phase "+" for the 313-th scanning line are recorded in the track T3, and pieces of line information ranging from the line information having the phase "-" for the 313-th scanning line to the line information having the phase "-" for the 625-th scanning line are recorded in the track T4.

In the special reproducing operation, after the pieces of line information recorded in a particular track T1 are reproduced while inclining the rotation axis 45 of the rotational drum DA and controlling the rotational number of the rotational drum DA, the magnetic head is moved from the particular track T1 to a particular track T2 or a particular track T4 not adjacent to the particular track T1. In this case, when the high speed reproducing operation is performed at a fast forward speed (4M+1) times as fast as a recording speed (hereinafter, called a (4M+1) forward speed), the magnetic head jumps over 4M tracks in the left direction (Fig. 4B), and the particular track T2 is scanned by the magnetic head. In contrast, when the high speed reproducing operation is performed at a fast forward speed (4M+3) times as fast as the recording speed (hereinafter, called a (4M+3) times forward speed), the magnetic head jumps over 4M+2 tracks in the left direction (Fig. 4B), and the particular track T4 is scanned by the magnetic head. That is, because the pair of magnetic heads H1 and H2 having the different azimuth angles are arranged on the rotational head to be spaced at 180 degrees apart, after the particular track T1 is scanned by one magnetic head having one azimuth angle, the particular track T2 or T4 is scanned by the other magnetic head having the other azimuth angle. In other words, any piece of line information recorded in the track T3 cannot be reproduced by using the other magnetic head having the other azimuth angle.

Also, because the rotational drum is rotated in synchronization with the horizontal synchronizing signals reproduced, the rotational speed of the rotational drum is heightened in the high speed reproducing operation, and the rotational speed of the rotational drum is lowered in a slow reproducing operation. In this case, because pieces of line information are recorded in a pair of tracks adjacent to each other in duplicate according to an overlap recording, the number of line information reproduced from each track (or the number of horizontal synchronizing signals in one vertical scanning period) is changed with the reproducing speed.

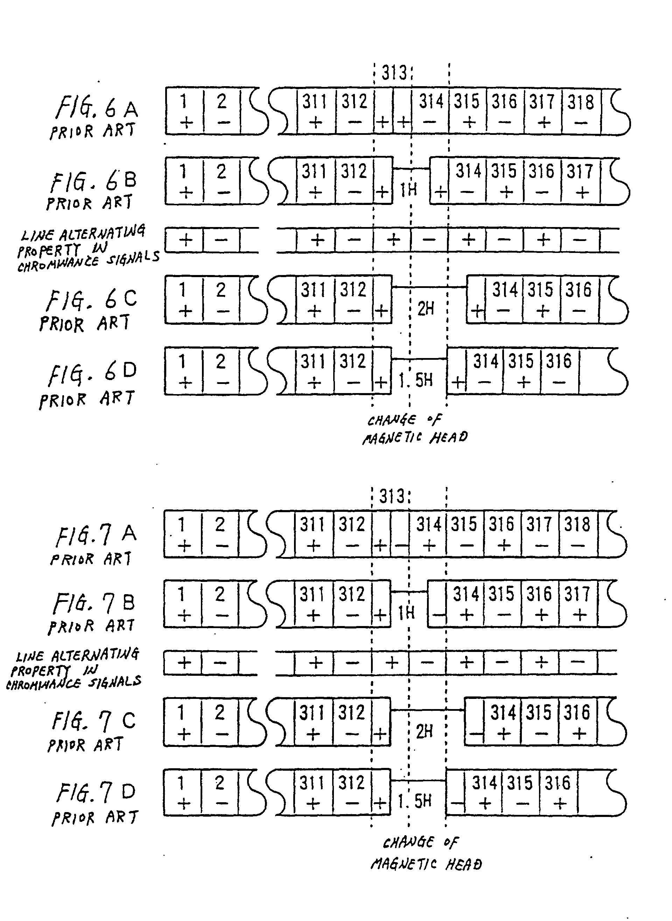

For example, in cases where the particular tracks T1 and T2 are scanned in that order at the (4M+1) times forward speed in the special reproducing operation, assuming that the change of the number of line information in one vertical scanning period in the special reproducing operation is not considered, a first series of line information reproduced by scanning the particular tracks T1 and T2 with the rotational heads H1 and H2 is shown in Fig. 6A. In cases where the number of line information in one vertical scanning period is increased by 1 (H) in the special reproducing operation, a second series of line information reproduced by scanning the particular tracks T1 and T2 is shown in Fig. 6B. In cases where the number of line information in one vertical scanning period is increased by 2 (H) in the special reproducing operation, a third series of line information reproduced by scanning the particular tracks T1 and T2 is shown in Fig. 6C. In cases where the number of line information in one vertical scanning period is increased by 1.5 (H) in the special reproducing operation, a fourth series of line information reproduced by scanning the particular tracks T1 and T2 is shown in Fig. 6D.

Therefore, the line alternating property is not maintained in the second series of line information (Fig. 6B) obtained in cases where the number of line information in one vertical scanning period is increased by 1 (H). Also, the horizontal synchronization is not maintained in the fourth series of line information (Fig. 6D) obtained in cases where the number of line information in one vertical scanning period is increased by 1.5 (H).

Also, in cases where the particular tracks T1 and T4 are scanned in that order at the (4M+3) times forward speed in the special reproducing operation, assuming that the change of the number of line information in one vertical scanning period in the special reproducing operation is not considered, a first series of line information reproduced by scanning the particular tracks T1 and T4 with the rotational heads H1 and H2 is shown in Fig. 7A. In cases where the number of line information in one vertical scanning period is increased by 1 (H) in the special reproducing operation, a second series of line information reproduced by scanning the particular tracks T1 and T4 is shown in Fig. 7B. In cases where the number of line information in one vertical scanning period is increased by 2 (H) in the special reproducing operation, a third series of line information reproduced by scanning the particular tracks T1 and T4 is shown in Fig. 7C. In cases where the number of line information in one vertical scanning period is increased by 1.5 (H) in the special reproducing operation, a fourth series of line information reproduced by scanning the particular tracks T1 and T4 is shown in Fig. 7D.

Therefore, the line alternating property is not maintained in the fourth series of line information (Fig. 7D) obtained in cases where the number of line information in one vertical scanning period is increased by 2 (H). Also, the horizontal synchronization is not maintained in the fourth series of line information (Fig. 7D) obtained in cases where the number of line information in one vertical scanning period is increased by 1.5 (H).

As shown in Figs. 6 and 7, in cases where the line alternating property is not maintained, a chrominance signal is not correctly reproduced. Therefore, though a luminance is maintained in a reproduced image, a decolored image is reproduced. Also, in cases where the horizontal synchronization is not maintained, a skew occurs in a reproduced image. That is, in cases where a fraction of 0.5 (H) is included in an increased or decreased number of the line information reproduced from each track, a skew occurs. In cases where the reproduction of information is performed at the (4M+1) times forward speed in the special reproducing operation, the line alternating property is maintained when an increased or decreased number of the line information reproduced from each track is even. In cases where the reproduction of information is performed at the (4M+3) times forward speed in the special reproducing operation, the line alternating property is maintained when an increased or decreased number of the line information reproduced from each track is odd.

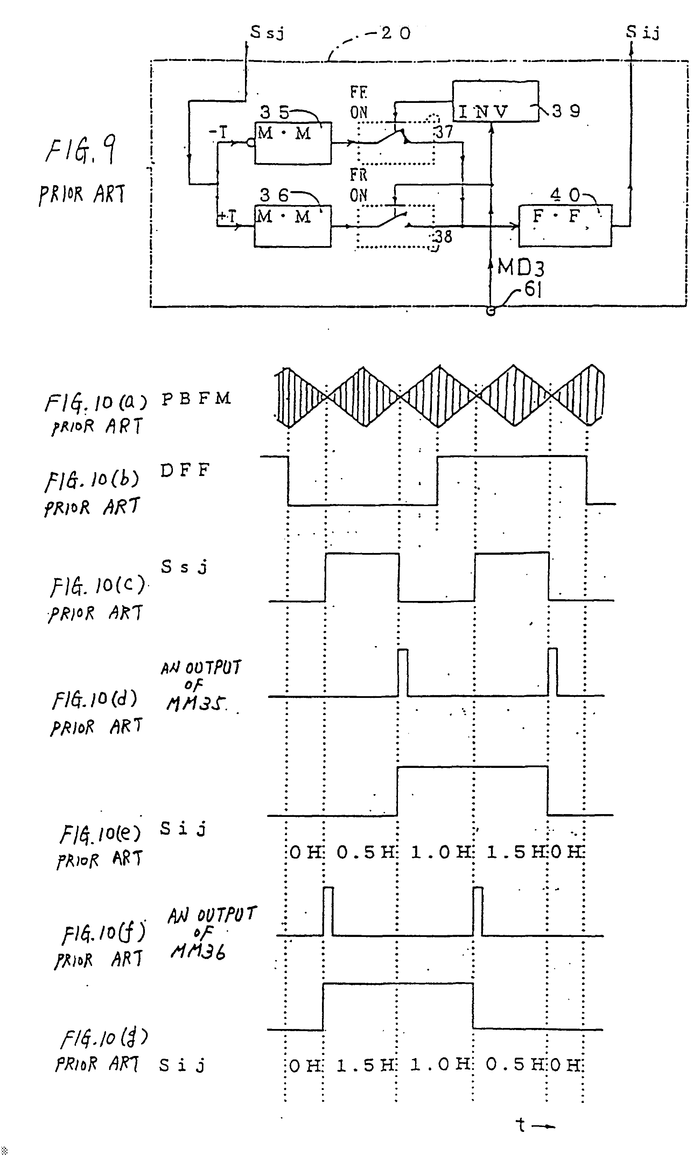

To solve the problem that the skew occurs or the reproduced image is decolored because of the change of the number of line information in each field (or track) scanned in the special reproducing operation, in cases where PAL type composite chrominance video signals recorded in a magnetic tape at a long time play mode is reproduced in the high speed reproducing operation of the fast forward (FF) speed or the fast reverse (FR) speed by a helical scan type VTR on condition that each of a plurality of patterned tracks crosses a scanning locus of a rotational magnetic head (for example, a condition shown in Fig. 1), a 0.5H delaying unit 9 shown in Fig. 8 and a conventional pulse generating unit 20 shown in Fig. 9 are used, each video signal is delayed in the 0.5H delaying unit 9 during the operation of the high speed reproducing operation to prevent the occurrence of a skew in a reproduced image, and the decoloring of the reproduced image is prevented by the function of the pulse generating unit 20. That is, a phase of each signal is delayed by 0.5 (H) in case of the fast forward (FF) reproducing operation, and a phase of each signal is advanced by 0.5 (H) in case of the fast reverse (FR) reproducing operation (refer to Figs. 10(a) to 10(g)).

A reproduced FM signal is shown in Fig. 10(a), a drum rotation reference phase signal for controlling the change of the rotational magnetic head is shown in Fig. 10(b), a skew jump signal Ssj output from a luminance signal processing circuit 3 shown in Fig. 8 is shown in Fig. 10(c), an output signal from a mono-stable multivibrator 35 of the pulse generating unit 20 shown in Fig. 9 in the reproducing operation at +5 times forward speed is shown in Fig. 10(d), a chrominance jump signal Sij output from the pulse generating unit 20 shown in Fig. 9 in the reproducing operation at +5 times forward speed is shown in Fig. 10(e), an output signal from a mono-stable multivibrator 36 of the pulse generating unit 20 in the reproducing operation at -3 times speed is shown in Fig. 10(f), and a chrominance jump signal Sij output from the pulse generating unit 20 in the reproducing operation at -3 times speed is shown in Fig. 10(g).

In the conventional pulse generating unit 20 shown in Fig. 9, a signal MD3 which is set to a low level in case of the FF reproducing operation and is set to a high level in case of the FR reproducing operation is fed from a control unit 21 to a terminal 61, and the signal MD3 is fed to a switch 38 as an open-close control signal for the switch 38 and is fed to a polarity inverting unit 39. An output signal from the inverting unit 39 is fed to a switch 37 as an open-close control signal for the switch 37. Therefore, the switch 37 is set to an "on" condition in the FF reproducing operation, and the switch 38 is set to an "on" condition in the FR reproducing operation.

The mono-stable multivibrator 35 of the pulse generating unit 20 is triggered at a time of a trailing edge of the signal Ssj (refer to Fig. 10(c)) output from the luminance signal processing circuit 3 of Fig. 8, and the output signal shown in Fig. 10 (d) is fed to the switch 37. Also, the mono-stable multivibrator 36 of the pulse generating unit 20 is triggered at a time of a leading edge of the signal Ssj, and the output signal shown in Fig. 10 (f) is fed to the switch 38. The signals output from the switches 37 and 38 are combined, a combined signal is frequency-divided in a flip-flop 40, and a frequency-divided signal is fed to a chrominance signal correcting circuit 7 of Fig. 8 as the signal Sij.

In Figs. 10(a) to 10(g), the correction of 0.5 (H) in a track jump is performed by delaying each video signal by 0.5 (H) when the signal Ssj is set to the high level and delaying each video signal by 1.0 (H) (a phase inversion) when the signal Sij is set to the high level. Also, because a phase of each video signal cannot be advanced by 0.5 (H), correlation between two horizontal scanning periods in the PAL type chrominance television video signals is utilized, the same effect as that in the phase advance of 0.5 (H) is obtained by performing the phase delay of 1.5 (H).

The signal Ssj is output from the luminance signal processing circuit 3 as a signal which changes to the high level condition or the low level condition when a cycle of the horizontal synchronizing signal separated in a synchronization separating circuit arranged in the luminance signal processing circuit 3 greatly shifts from a normal cycle.

The signal Ssj is also fed to the 0.5H delaying unit 9 shown in Fig. 8. In the 0.5H delaying unit 9, a signal fed from an adder 8 to the 0.5H delaying unit 9 is output as a signal which is delayed by 0.5 (H) when the signal Ssj is set to the high level condition, and the signal is fed to a pair of digital analog converters 12 and 14 through a pair of changing-over switches 10 and 11. A symbol L in the switches 10 and 11 denotes a fixed contact point contacting with a movable contact point Pv during the high speed reproducing operation in the long time play mode, and a symbol S in the switches 10 and 11 denotes a fixed contact point contacting with the movable contact point Pv during a reproduction operation at a reproduction mode other than the high speed reproducing operation in the long time play mode.

However, in cases where video signals recorded on the magnetic tape at the long time play (LP) mode are reproduced in the high speed production in a conventional helical scan type VTR having the pulse generating unit 20 shown in Fig. 9 on condition that a scanning locus of the rotational magnetic head agrees with each recording track formed on the magnetic tape, a skew occurs when a timing of a series of horizontal synchronizing signals in one vertical scanning period (or one track) shifts in a changing-over operation of a pair of rotational magnetic heads. Also, a reproduced image is decolored when the number of line information reproduced from one track is increased or decreased as compared with a standard line information number, and a series of phases of the chrominance signals shifts because of the increase or decrease of the line information number reproduced. Therefore, it is required to prevent that a skew occurs in the reproduced image or the reproduced image is decolored.

Also, the relationship between the high speed reproduction and the loss of the line alternating property in the chrominance signals or the occurrence of the skew is clearly realized. Therefore, even though a detecting circuit in which the signal Ssj used to detect the skew and the signal Sij indicating the loss of the line alternating property in the chrominance signals are generated is not used, the loss of the line alternating property in the chrominance signals or the occurrence of the skew can be detected. Therefore, it is preferable that a correction for the loss of the line alternating property in the chrominance signals or a correction for the occurrence of the skew is performed when the loss of the line alternating property in the chrominance signals or the occurrence of the skew is detected. That is, the detecting circuit can be omitted in cases where a correction for the loss of the line alternating property in the chrominance signals or a correction for the occurrence of the skew is performed.

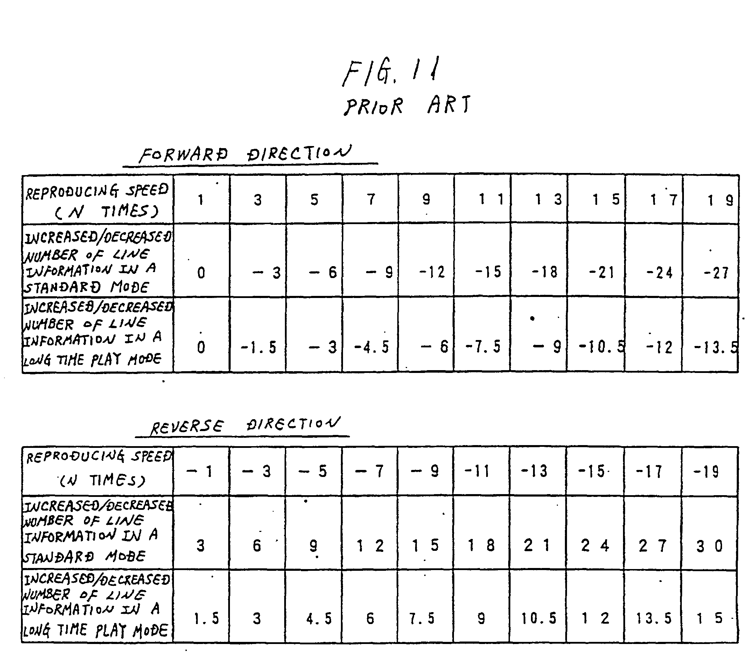

The relationship between the high speed reproduction and the line alternating property is shown in Fig. 11.

As shown in Fig. 11, an increased or decreased number of the line information reproduced from each track is alternately changed to an odd number and an even number according to a reproducing speed of the magnetic tape in a standard mode of the VTR. Also, in case of the long time play mode, a case that a fraction of 0.5 (H) is included in an increased or decreased number of the line information reproduced from each track occurs on every other reproducing speed of the magnetic tape.

In detail, in case of the long time play mode of the (4M+1) reproducing speed in the special reproducing operation, an increased or decreased number of the line information reproduced from each track becomes an even number when the value M is an even number (the reproducing speed is -15, -7, 1, 9 or 17 times as fast as a standard speed), so that no skew occurs and the line alternating property is maintained. When the value M is an odd number (the reproducing speed is -19, -11, -3, 5 or 13 times), an increased or decreased number of the line information reproduced from each track becomes an odd number, so that the line alternating property is lost (or inverted). Also, in case of the (4M+3) times reproducing speed in the special reproducing operation (the reproducing speed is -17, -13, -9, -5, -1, 3, 7, 11 or 19 times), a fraction of 0.5 (H) is included in an increased or decreased number of the line information reproduced from each track, so that a skew occurs in the reproduced image. This skew occurs each time the pair of magnetic heads are changed-over each other, and the fraction of 0.5 (H) is accumulated every change-over of the magnetic heads. Therefore, the accumulation of the fraction of 0.5 (H) influences on the inversion of a phase of the chrominance signal, so that the line alternating property is lost.

Therefore, in cases where the special reproducing operation of the magnetic tape on which video signals are recorded at the long time play mode is performed, because the occurrence of the skew or the loss of the line alternating property is caused by a particular fast reproducing speed of the magnetic tape, even though a skew detecting circuit (corresponding to the luminance signal processing circuit 3 from which the signal Ssj is output) or a detecting circuit (corresponding to the pulse generating unit 20 from which the signal Sij is output) is not used, the correction of the skew or the correction for the loss of the line alternating property can be performed.

### SUMMARY OF THE INVENTION

A first aim of the present invention is to provide, with due consideration to the drawbacks of such a conventional magnetic reproducing apparatus, a magnetic reproducing apparatus in which a colored reproduced image is reliably obtained even though a pair of rotational magnetic heads are changed-over each other.

A second aim of the present invention is to provide a magnetic reproducing apparatus in which the occurrence of a skew or the loss of the line alternating property is reliably prevented without any detecting circuit for detecting the occurrence of the skew or the loss of the line alternating property.

According to the present invention there is provided: a magnetic reproducing apparatus, comprising:
a rotational drum (DA) on which a magnetic tape (T) having a plurality of patterned tracks, which indicate a plurality of PAL type color television video signals recorded at a long time recording speed in a long time play mode, is wound, the long time recording speed being lower than a standard recording speed at which a normal recording of the PAL type color television video signals is performed;
a pair of rotational magnetic heads (H1 and H2), arranged on the rotational drum to be spaced at 180 degrees apart, for alternately scanning the magnetic tape, two scanning loci of the rotational magnetic heads being alternately drawn on the magnetic tape;
scanning locus adjusting means (52 to 60, Lr, M1, RE1, PS1, M2, RE2 and PS2) for adjusting positions of the scanning loci drawn by the rotational magnetic heads on the magnetic tape to place each scanning locus on only one patterned track of the magnetic tape; and
signal reproducing means (3 and 4) for reproducing the PAL type color television video signals read out from the magnetic tape through the rotational magnetic heads to reproduce an image from the PAL type color television video signals,
characterized in that
the magnetic reproducing apparatus further comprises
phase inversion control means (6, 7 and 20) for controlling phases of a plurality of color difference signals R-Y included in the PAL type color television video signals which are read out from the magnetic tape travelling at a special reproducing speed higher than the long time recording speed set for the recording of the PAL type color television video signals in the long time play mode on condition that the phases of the color difference signals R-Y are alternately set to an inverted condition every horizontal scanning period even though one rotational magnetic head scanning the magnetic tape is changed to the other rotational magnetic head.

In the above configuration, in cases where the PAL type color television video signals are recorded at the long time play mode in which the magnetic tape is run at the long time recording speed lower than a standard recording speed and the PAL type color television video signals are read out from the magnetic tape at a special reproducing speed five times, seven times, minus three times or minus five times as fast as the long time recording speed, the number of horizontal synchronizing signals (or color difference signals R-Y) in one vertical scanning period does not agree with a standard number. Therefore, there is a problem in the prior art that the phases of the color difference signals R-Y are not alternately inverted every horizontal scanning period, so that an image reproduced from the PAL type color television video signals read out from the magnetic tape is undesirably decolored.

In the present invention, even though one rotational magnetic head scanning the magnetic tape is changed to the other rotational magnetic head, the phases of the color difference signals R-Y are controlled by the phase inversion control means to be alternately set to an inverted condition every horizontal scanning period.

Accordingly, even though the PAL type color television video signals recorded at the long time play mode are read out at the special reproducing speed higher than the long time recording speed, the colored image can be reliably reproduced from the PAL type color television video signals.

The present invention also provides a special reproducing method, comprising the steps of:
preparing a magnetic tape (T) on which a plurality of patterned tracks indicating a plurality of PAL or SECAM type color television video signals recorded at a long time play mode in which the magnetic tape is run at a long time recording speed lower than a standard recording speed are formed in series;
preparing a pair of rotational magnetic heads (H1 and H2) arranged on a rotational drum (DA);
winding the magnetic tape on a part of a periphery of the rotational drum;
running the magnetic tape at a special reproducing speed (8M+1) times (M is an integral number) as fast as the long time recording speed while the rotational magnetic heads alternately scan the magnetic tape to alternately draw two scanning loci of the rotational magnetic heads on the magnetic tape;
changing an inclination of a central axis of the rotational drum and a position of the rotational drum to place each scanning locus on only one patterned track of the magnetic tape;
reading out the PAL or SECAM type color television video signals recorded on the magnetic tape through the rotational magnetic heads; and
reproducing an image from the PAL or SECAM type color television video signals read out at the special reproducing speed.

The present invention also provides a magnetic reproducing apparatus, comprising:
a rotational drum (DA) on which a magnetic tape (T) having a plurality of patterned tracks, which indicate a plurality of PAL or SECAM type color television video signals recorded at a long time recording speed in a long time play mode, is wound, the long time recording speed being lower than a standard recording speed at which a normal recording of the PAL or SECAM type color television video signals is performed;
magnetic tape running means (101) for running the magnetic tape;
rotational drum rotating means for rotating the rotational drum at a prescribed rotational speed determined according to a running speed of the magnetic tape run by the magnetic tape running means;
a pair of rotational magnetic heads (H1 and H2), arranged on the rotational drum, for alternately scanning the magnetic tape, two scanning loci of the rotational magnetic heads being alternately formed on the magnetic tape;
scanning locus adjusting means (102) for inclining a central axis of the rotational drum or shifting the rotational drum to adjust positions of the scanning loci drawn on the magnetic tape and placing each scanning locus on only one patterned track of the magnetic tape;
chrominance signal reproducing means (103) for reproducing a plurality of chrominance signals from the PAL or SECAM type color television video signals read out from the magnetic tape through the rotational magnetic heads;
luminance signal reproducing means (104) for reproducing a plurality of luminance signals from the PAL or SECAM type color television video signals read out from the magnetic tape through the rotational magnetic heads; and
signal multiplexing means (105) for multiplexing each of the chrominance signals reproduced by the chrominance signal reproducing means and each of the luminance signals reproduced by the luminance signal reproducing means to produce a plurality of composite video signals, an image being reproduced from the composite video signals,
**characterized in that**
the magnetic reproducing apparatus further comprises
running speed setting means (102) for setting a running speed of the magnetic tape run by the magnetic tape running means to a special reproducing speed (8M+1) times (M is an integral number) as fast as the long time recording speed.

In the above method and apparatus, in cases where the PAL or SECAM type color television video signals recorded at a long time recording speed lower than a standard recording speed are read out at a special reproducing speed (8M+1) times as fast as the long time recording speed, the number of horizontal synchronizing signals in one vertical scanning period is increased or decreased by an even number as compared with the number of horizontal synchronizing signals read out every one vertical scanning period in cases where the magnetic tape is run at the standard recording speed. Any skew does not occurs in a reproduced image. Also, phases of chrominance signals included in the video signals are alternately set to an inverted condition every horizontal scanning period, so that the decolaration of the reproduced image can be prevented.

The present invention also provides a magnetic reproducing apparatus, comprising:
a rotational drum (DA) on which a magnetic tape (T) having a plurality of patterned tracks, which indicate a plurality of PAL or SECAM type color television video signals recorded at a long time recording speed in a long time play mode, is wound, the long time recording speed being lower than a standard recording speed at which a normal recording of the PAL or SECAM type color television video signals is performed;
magnetic tape running means (101) for running the magnetic tape;
rotational drum rotating means for rotating the rotational drum at a prescribed rotational speed determined according to a running speed of the magnetic tape run by the magnetic tape running means;
a pair of rotational magnetic heads (H1 and H2), arranged on the rotational drum, for alternately scanning the magnetic tape, two scanning loci of the rotational magnetic heads being alternately formed on the magnetic tape; and
scanning locus adjusting means (102) for inclining a central axis of the rotational drum or shifting the rotational drum to adjust positions of the scanning loci drawn on the magnetic tape and placing each scanning locus on only one patterned track of the magnetic tape,
**characterized in that**
1H delaying means (184) for delaying each of a plurality of low band converted chrominance signals, which are included in the PAL or SECAM type color television video signals read out from the magnetic tape through the rotational magnetic heads, by 1 H time-period equal to a period of one horizontal synchronizing signal;
selecting means (113) for alternately selecting a series of low band converted chrominance signals delayed by the 1H delaying means and a series of low band converted chrominance signals not delayed, each time one rotational magnetic head scanning the magnetic tape is changed to the other rotational magnetic head;
chrominance signal reproducing means (185) for reproducing a plurality of chrominance signals from the series of low band converted chrominance signals alternately selected by the selecting means;
luminance signal reproducing means (104) for reproducing a plurality of luminance signals from the PAL or SECAM type color television video signals read out from the magnetic tape through the rotational magnetic heads; and
signal multiplexing means (105) for multiplexing each of the chrominance signals reproduced by the chrominance signal reproducing means and each of the luminance signals reproduced by the luminance signal reproducing means to produce a plurality of composite video signals, an image being reproduced from the composite video signals.

In the above configuration, because each of the low band converted chrominance signals having a low band frequency is delayed by 1 H time-period, the 1H delaying means can be simplified, and the line alternating property in the chrominance signals can be corrected.

The present invention also provides a magnetic reproducing apparatus, comprising:
a rotational drum (DA) on which a magnetic tape (T) having a plurality of patterned tracks, which indicate a plurality of PAL or SECAM type color television video signals recorded at a long time recording speed in a long time play mode, is wound, the long time recording speed being lower than a standard recording speed at which a normal recording of the PAL or SECAM type color television video signals is performed;
magnetic tape running means (101) for running the magnetic tape;
rotational drum rotating means for rotating the rotational drum at a prescribed rotational speed determined according to a running speed of the magnetic tape run by the magnetic tape running means;
a pair of rotational magnetic heads (H1 and H2), arranged on the rotational drum, for alternately scanning the magnetic tape, two scanning loci of the rotational magnetic heads being alternately formed on the magnetic tape;
scanning locus adjusting means (102) for inclining a central axis of the rotational drum or shifting the rotational drum to adjust positions of the scanning loci drawn on the magnetic tape and placing each scanning locus on only one patterned track of the magnetic tape; and
reproducing means (193, 194, 195, 196, 197, 198, 104 and 105) for reproducing the PAL or SECAM type color television video signals read out from the magnetic tape through the rotational magnetic heads,
**characterized in that**
the magnetic reproducing apparatus further comprises:
delaying means (199 and 200), functioning as a comb filter, for removing a crosstalk from each of a plurality of PAL type low band converted chrominance signals, which are included in the PAL type color television video signals read out from the magnetic tape through the rotational magnetic heads, and delaying each of a plurality of SECAM type low band converted chrominance signals, which are included in the SECAM type color television video signals read out from the magnetic tape through the rotational magnetic heads, by 1 H time-period equal to a period of one horizontal synchronizing signal; and
selecting means (202) for alternately selecting a series of SECAM type low band converted chrominance signals delayed by the delaying means and a series of SECAM type low band converted chrominance signals of the SECAM type color television video signals not delayed, each time one rotational magnetic head scanning the magnetic tape is changed to the other rotational magnetic head, the SECAM type color television video signals being reproduced from the selected series of SECAM type low band converted chrominance signals and a plurality of luminance signals of the SECAM type color television video signals by the reproducing means.

In the above configuration, the delaying means are used not only for the PAL type low band converted chrominance signals as a comb filter to remove a crosstalk thereof but also for the SECAM type low band converted chrominance signals to correct the line alternating property in the chrominance signals. Therefore, the configuration of the magnetic reproducing apparatus can be simplified.

The present invention also provides a magnetic reproducing apparatus, comprising:
a rotational drum (DA) on which a magnetic tape (T) having a plurality of patterned tracks, which indicate a plurality of PAL or SECAM type color television video signals recorded at a long time recording speed in a long time play mode, is wound, the long time recording speed being lower than a standard recording speed at which a normal recording of the PAL or SECAM type color television video signals is performed;
magnetic tape running means (101) for running the magnetic tape;
rotational drum rotating means for rotating the rotational drum at a prescribed rotational speed determined according to a running speed of the magnetic tape run by the magnetic tape running means;
a pair of rotational magnetic heads (H1 and H2), arranged on the rotational drum, for alternately scanning the magnetic tape, two scanning loci of the rotational magnetic heads being alternately formed on the magnetic tape; and
scanning locus adjusting means (102) for inclining a central axis of the rotational drum or shifting the rotational drum to adjust positions of the scanning loci drawn on the magnetic tape and placing each scanning locus on only one patterned track of the magnetic tape, and
**characterized in that**
the magnetic reproducing apparatus further comprises:
delaying means (192), functioning as a comb filter, for removing a crosstalk from each of a plurality of PAL type low band converted chrominance signals, which are included in the PAL type color television video signals read out from the magnetic tape through the rotational magnetic heads, and delaying each of a plurality of SECAM type low band converted chrominance signals, which are included in the SECAM type color television video signals read out from the magnetic tape through the rotational magnetic heads, by 1 H time-period equal to a period of one horizontal synchronizing signal;
first frequency changing means (193) for changing a frequency of each of the PAL type low band converted chrominance signals included in the PAL type color television video signals to change the PAL type low band converted chrominance signals to a plurality of first PAL type chrominance signals;
second frequency changing means (195) for changing a frequency of each of the PAL type low band converted chrominance signals processed by the delaying means to change the PAL type low band converted chrominance signals to a plurality of second PAL type chrominance signals;
an adder (197) for adding the first PAL type chrominance signals obtained by the first frequency changing means and the second PAL type chrominance signals obtained by the second frequency changing means to produce a plurality of PAL type filtered chrominance signals;
selecting means (202) for alternately selecting a series of SECAM type low band converted chrominance signals delayed by the delaying means and a series of SECAM type low band converted chrominance signals of the SECAM type color television video signals not delayed, each time one rotational magnetic head scanning the magnetic tape is changed to the other rotational magnetic head;
chrominance signal reproducing means (211) for reproducing a plurality of SECAM type chrominance signals from the series of SECAM type low band converted chrominance signals selected by the selecting means;
luminance signal reproducing means (104) for reproducing a plurality of PAL or SECAM type luminance signals from the PAL or SECAM type color television video signals read out from the magnetic tape through the rotational magnetic heads; and
signal multiplexing means (105) for multiplexing each of the PAL type filtered chrominance signals obtained in the adder and each of the PAL type luminance signals reproduced by the luminance signal reproducing means to produce a plurality of PAL type composite video signals and multiplexing each of the SECAM type chrominance signals and each of the SECAM type luminance signals reproduced by the luminance signal reproducing means to produce a plurality of SECAM type composite video signals, an image being reproduced from the PAL or SECAM type composite video signals.

In the above configuration, the delaying means are used not only for the PAL type low band converted chrominance signals as a comb filter but also for the SECAM type low band converted chrominance signals. Therefore, the removal of a crosstalk in the PAL type low band converted chrominance signals and the correction of the line alternating property in the SECAM type low band converted chrominance signals can be performed in the same delaying means, and the configuration of the magnetic reproducing apparatus can be simplified.

### BRIEF DESCRIPTION OF THE DRAWINGS

The objects, features and advantages of the present invention will be apparent from the following description taken in conjunction with the accompanying drawings, in which:
Fig. 1 shows a series of patterned tracks recorded on a magnetic tape and a scanning locus of a magnetic head crossing over a plurality of patterned tracks in a conventional high speed reproducing operation;
Fig. 2 shows a condition that the scanning locus of the magnetic head passes through one patterned track formed on the magnetic tape shown in Fig. 1;
Fig. 3 shows a mechanism for inclining a central axis of a rotational drum and changing a position of a leading portion used to lead a reference end side of a magnetic tape to make a scanning locus of a magnetic head pass through each patterned recording track formed on the magnetic tape;
Fig. 4A shows a series of patterned tracks formed on a magnetic tape by recording a series of PAL type television signals according to a 4-field sequence pattern;
Fig. 4B is an enlarged view showing end portions of three tracks in Fig. 4A placed in the neighborhood of a reference end side of the magnetic tape;
Fig. 5 is an example of a configuration of an inclination control unit shown in Fig. 3;
Figs. 6A to 6D respectively show a series of line information obtained by reproducing pieces of line information recorded in a magnetic tape at a (4M+1) times reproducing speed in a special reproducing operation to explain the loss (or inversion) of a line alternating property and the occurrence of a skew;
Figs. 7A to 7D respectively show a series of line information obtained by reproducing pieces of line information recorded in a magnetic tape at a (4M+3) times reproducing speed in a special reproducing operation to explain the loss (or inversion) of a line alternating property and the occurrence of a skew;
Fig. 8 is a block diagram of a fundamental magnetic reproducing apparatus for the prior art and the present invention;
Fig. 9 is a block diagram of a conventional pulse generating unit shown in Fig. 8;
Figs. 10(a) to 10(g) show timing charts of signal waveforms to indicate an operation performed in a conventional magnetic reproducing apparatus in which the conventional pulse generating unit shown in Fig. 9 is arranged;
Fig. 11 shows a relationship between a reproducing speed of a magnetic tape and an increased or decreased number of the line information reproduced from each track in tabular form;
Figs. 12(a) to 12(j) show timing charts of signal waveforms to indicate an operation performed in a magnetic reproducing apparatus according to the present invention in which a pulse generating unit according to the present invention is arranged;
Fig. 13 shows a change in the number of horizontal synchronizing signals in one vertical scanning period in case of the reproducing operation at an N times reproducing speed;
Fig. 14 shows a series of phases of chrominance signals reproduced at each N times reproducing speed at a time that one rotational magnetic head scanning the magnetic tape is changed to the other rotational magnetic head;
Fig. 15 is a block diagram of the pulse generating unit according to the present invention which is arranged in the magnetic reproducing apparatus shown in Fig. 8;
Fig. 16 is an explanatory view of a magnetic reproducing apparatus according to a second embodiment of the present invention;
Fig. 17 show an estimation for the occurrence of a skew and/or the occurrence of decoloration in a special reproducing operation performed in the magnetic reproducing apparatus shown in Fig. 16 at the (8M+1), (8M+5) or (4M+3) times reproducing speed;
Fig. 18 is an explanatory view of a magnetic reproducing apparatus according to a third embodiment of the present invention;
Fig. 19 show an estimation for the occurrence of a skew and/or the occurrence of decoloration in a special reproducing operation performed in the magnetic reproducing apparatus shown in Fig. 18 at the (8M+1), (8M+5) or (4M+3) times reproducing speed;
Fig. 20 is an explanatory view of a magnetic reproducing apparatus according to a fourth embodiment of the present invention;
Fig. 21 show an estimation for the occurrence of a skew and/or the occurrence of decoloration in a special reproducing operation performed in the magnetic reproducing apparatus shown in Fig. 20 at the (8M+1), (8M+5) or (4M+3) times reproducing speed;
Fig. 22 is an explanatory view of a magnetic reproducing apparatus according to a modification of the fourth embodiment of the present invention;
Fig. 23 is an explanatory view of a magnetic reproducing apparatus according to a fifth embodiment of the present invention;
Fig. 24 show an estimation for the occurrence of a skew and/or the occurrence of decoloration in a special reproducing operation performed in the magnetic reproducing apparatus shown in Fig. 23 at the (8M+1), (8M+5) or (4M+3) times reproducing speed;
Fig. 25 is an explanatory view of a magnetic reproducing apparatus according to a sixth embodiment of the present invention;
Fig. 26 show an estimation for the occurrence of a skew and/or the occurrence of decoloration in a special reproducing operation performed in the magnetic reproducing apparatus shown in Fig. 25 at the (8M+1), (8M+5) or (4M+3) times reproducing speed;
Fig. 27 is an explanatory view of a magnetic reproducing apparatus according to a seventh embodiment of the present invention;
Fig. 28 show an estimation for the occurrence of a skew and/or the occurrence of decoloration in a special reproducing operation performed in the magnetic reproducing apparatus shown in Fig. 27 at the (8M+1), (8M+5) or (4M+3) times reproducing speed;
Fig. 29 is an explanatory view of a magnetic reproducing apparatus according to a modification of the seventh embodiment of the present invention;
Fig. 30 is a block diagram of a magnetic reproducing apparatus with an chrominance signal correcting circuit according to an eighth embodiment of the present invention;
Fig. 31 is a block diagram of a magnetic reproducing apparatus with an chrominance signal correcting circuit according to a ninth embodiment of the present invention;
Fig. 32 is a block diagram of a magnetic reproducing apparatus with an chrominance signal correcting circuit according to a modification of the ninth embodiment of the present invention;
Figs. 33A to 33C show a process for transforming NTSC type chrominance signals into pseudo-PAL type chrominance signals;
Fig. 34 is a block diagram of a PAL/NTSC transforming circuit in which the NTSC type chrominance signals are transformed into the pseudo-PAL type chrominance signals;
Fig. 35 is a block diagram of a magnetic reproducing apparatus with an chrominance signal correcting circuit according to another modification of the ninth embodiment of the present invention; and
Fig. 36 is a block diagram of a magnetic reproducing apparatus with an chrominance signal correcting circuit according to another modification of the ninth embodiment of the present invention.

### DETAILED DESCRIPTION OF THE EMBODIMENTS

Preferred embodiments of a magnetic reproducing apparatus, a special reproducing method and a chrominance signal correcting circuit according to the present invention are described with reference to drawings.

### (First Embodiment)

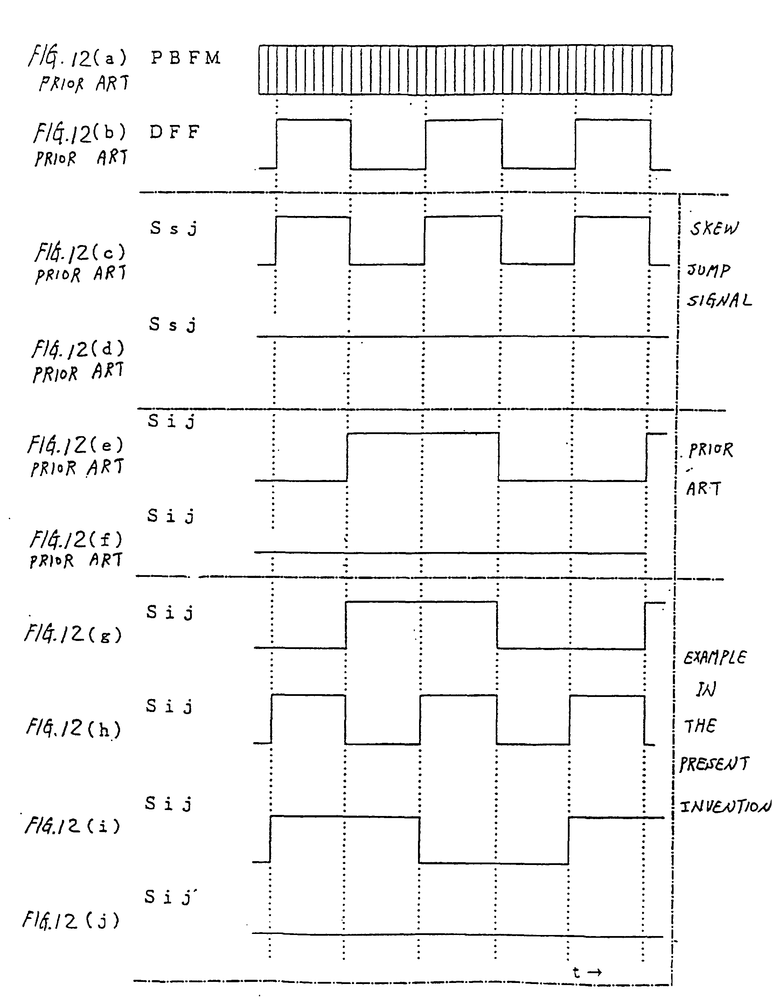

Fig. 8 is a block diagram of a fundamental magnetic reproducing apparatus used for the present invention. In cases where a reproducing operation for reproducing video signals from a magnetic tape at a high speed is performed in the magnetic reproducing apparatus, because the pair of rotational magnetic heads alternately track the patterned tracks with accuracy, as shown in Fig. 12(a), an envelope of a reproduced FM signal PBFM indicating pieces of line information obtained in the reproducing operation is flat.

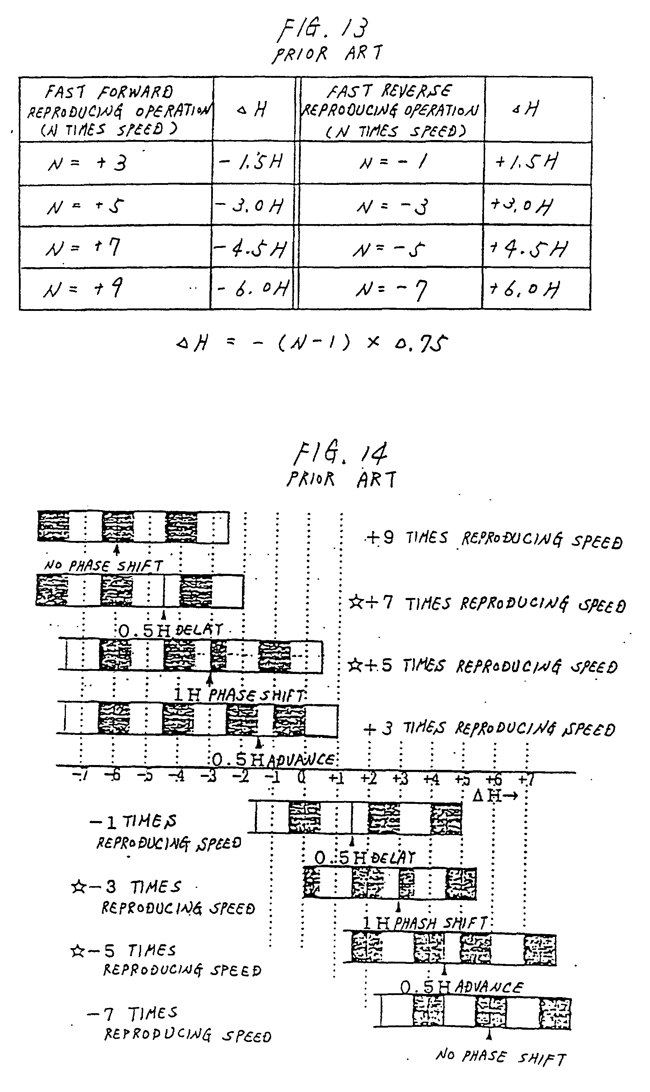

However, as shown in Fig. 13, the number of horizontal synchronizing signals in one reproducing signal for one vertical scanning period is increased or decreased by a value ΔH according to a reproducing speed coefficient N (N denotes a reproducing speed N times as fast as a long time recording speed), and a condition of a phase of a chrominance signal at a changing-over time of one rotational magnetic head is changed according to the increase or decrease ΔH. Therefore, in cases where the reproduced signals obtained from the rotational magnetic heads accurately tracking the patterned tracks are fed to a reproducing circuit of the conventional magnetic recording and reproducing apparatus in which the pulse generating unit 20 shown in Fig. 9 is arranged, there is a case that a reproduced image is decolored at a time that one rotational magnetic head is changed to the other rotational magnetic head.

Fig. 14 shows a series of phases of chrominance signals reproduced at each N times reproducing speed at a time that one rotational magnetic head is changed to the other rotational magnetic head on condition that the rotational magnetic heads accurately track the patterned tracks. In case of the FF reproducing mode, the value N is set to +3, +5, +7 or +9. In case of the FR reproducing mode, the value N is set to -1, -3, -5 or -7. In cases where the pulse generating unit 20 is arranged in the magnetic reproducing apparatus shown in Fig. 8, when the reproduced signals obtained in the rotational magnetic heads accurately tracking the patterned tracks are fed to the magnetic reproducing apparatus, the reproduced image is decolored in the reproducing modes of N=+7, N=+5, N=-3 and N=-5.

As shown in Fig. 8, one reproduced signal fed to an input terminal 1 is amplified in a pre-amplifier 2 and is fed to the luminance signal processing circuit 3 and a chrominance signal processing circuit 4. In the luminance signal processing circuit 3, a prescribed signal processing for a frequency modulating wave signal is performed with a luminance signal of the reproduced signal to obtain a reproduced luminance signal, and the reproduced luminance signal is fed to an analog digital converter 5. Also, in the luminance signal processing circuit 3, when a timing of one horizontal synchronizing signal output from a synchronizing separating circuit of the luminance signal processing circuit 3 shifts by 0.5 H time-period (1 H time-period is equal to a time required to read out one horizontal synchronizing signal (or one piece of line information) recorded on the magnetic tape, and 1 H time-period is, for example, 64 µsecond), a level of the skew jump signal Ssj is changed to the high or low level condition.

Also, in the chrominance signal processing circuit 4, a prescribed signal processing operation for a PAL type low band converting carrier chrominance signal is performed to obtain a chrominance signal, and the chrominance signal is fed to an analog digital converter 6.

Digital data indicated by the luminance signal output from the analog digital converter 5 is fed to the adder 8 and the fixed contacting point S of the change-over switch 10. Also, digital data indicated by the chrominance signal output from the analog digital converter 6 is fed to the adder 8 and the fixed contacting point S of the change-over switch 11 through the chrominance signal correcting circuit 7. In this case, when the chrominance jump signal Sij set to the high level condition is fed from the pulse generating unit 20 to the chrominance signal correcting circuit 7, a phase of a color difference signal R-Y existing as one of components in the chrominance signal is inverted in the chrominance signal correcting circuit 7. Thereafter, digital data indicated by one video signal which is composed of the luminance signal and the color difference signal R-Y is fed from the adder 8 to the 0.5H delaying unit 9 in which a signal is time-delayed by half of one horizontal scanning period.

In the 0.5H delaying unit 9, when the skew jump signal Ssj generated in the luminance signal processing circuit 3 indicates the detection of a skew because a video signal reproduced from the magnetic tape through one rotational magnetic head shifts by a 0.5 H time-period and is fed to the 0.5H delaying unit 9, digital data indicated by the video signal fed from the adder 8 is time-delayed by the 0.5 H time-period and is fed to the fixed contacting points L of the change-over switches 10 and 11.

The movable contact points v of the change-over switches 10 and 11 are connected to the fixed contacting points L of the change-over switches 10 and 11 when the magnetic reproducing apparatus is set to in the high speed reproducing operation to reproduce video signals recorded on the magnetic tape T at the long time play mode. Also, the movable contact points v of the change-over switches 10 and 11 are connected to the fixed contacting points S of the change-over switches 10 and 11 when the magnetic reproducing apparatus is set to a reproducing operation other than the high speed reproducing operation for the video signals recorded at the long time play mode.

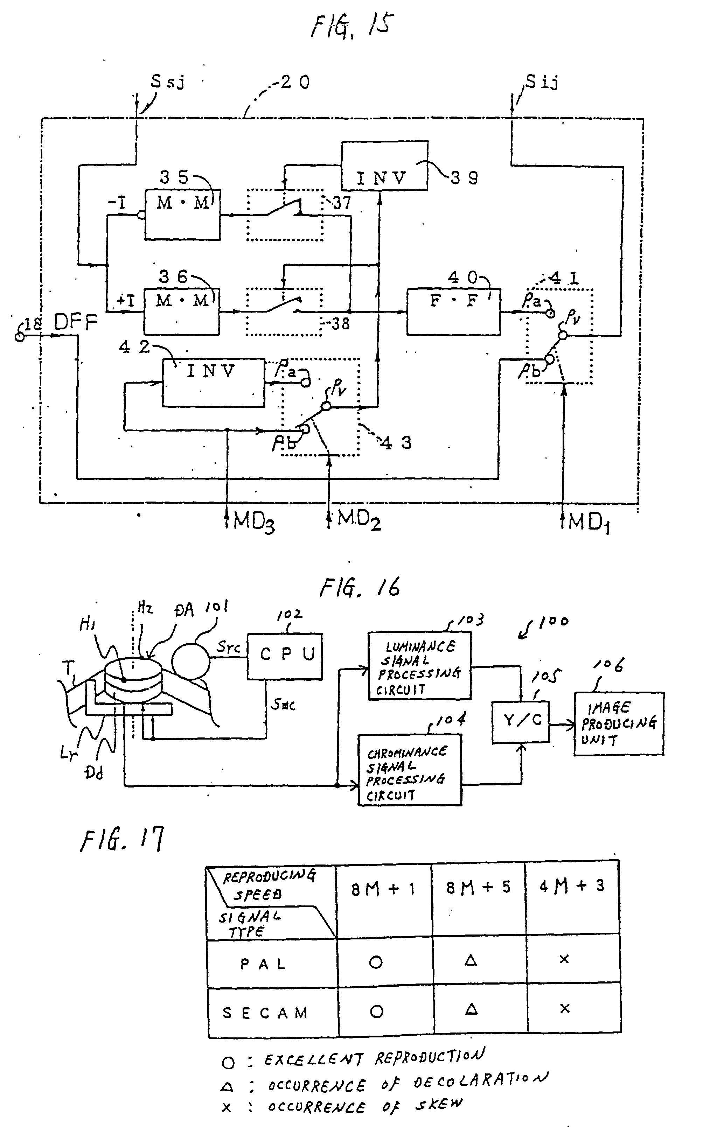

In the present invention, the pulse generating unit 20 of which a configuration is shown in Fig. 15 is arranged in the magnetic reproducing apparatus shown in Fig. 8. As shown in Fig. 15, a drum rotation reference phase signal DFF is fed to an input terminal 18 and is fed to a fixed contacting point b of a change-over switch 41. Also, the signal Ssj is fed to trigger terminals of a pair of mono-stable multivibrators 35 and 36.

A first change-over control signal MD1 is fed from the control unit 21 to a change-over switch 41. Therefore, a movable contacting point Pv of the change-over switch 41 is connected to a fixed contact point Pb of the change-over switch 41 in case of the FR reproducing operation at the three times reproducing speed (N=+3) for the video signals recorded at the long time play mode. Also, the movable contacting point Pv of the change-over switch 41 is connected to a fixed contact point Pa of the change-over switch 41 in case of a high speed reproducing operation other than the FR reproducing operation at the three times reproducing speed for the video signals recorded at the long time play mode.

Also, a second change-over control signal MD2 is fed from the control unit 21 to a change-over switch 43. Therefore, a movable contacting point Pv of the change-over switch 43 is connected to a fixed contact point Pb of the change-over switch 43 in case of the FR reproducing operation at the seven times reproducing speed or the minus five times reproducing speed (N=+7 or -5) for the video signals recorded at the long time play mode. Also, the movable contacting point Pv of the change-over switch 43 is connected to a fixed contact point Pa of the change-over switch 43 in case of the other high speed reproducing operation.

Also, a third change-over control signal MD3 which is set to the low level in case of the FF reproducing operation for the video signals recorded at the long time play mode and is set to the high level in case of the FR reproducing operation for the video signals recorded at the long time play mode is fed from the control unit 21 to the fixed contacting point Pb of the change-over switch 43 and an input side of an inverter 42. Therefore, an inverted signal which is set to the high level in case of the FF reproducing operation for the video signals recorded at the long time play mode and is set to the low level in case of the FR reproducing operation for the video signals recorded at the long time play mode is fed from the inverter 42 to the fixed contacting point Pa of the change-over switch 43.

A signal output from a movable contacting point Pv of the change-over switch 43 is fed to a switch 38 as an open-close control signal for the switch 38 and an inverter (or a polarization inverting unit) 39. A signal output from the inverter 39 is fed to a switch 37 as an open-close control signal for the switch 37. Therefore, when the movable contacting point Pv of the change-over switch 43 is connected to the fixed contacting point Pa of the change-over switch 43, that is, the magnetic reproducing apparatus according to the present invention is operated in the seven or minus five times reproducing speed (N=+7 or -5) for the video signals recorded at the long time play mode, the signal output from the inverter 42 is fed to the switch 38 as the open-close control signal, and an inverted signal which is obtained by inverting a polarity of the signal output from the inverter 42 is fed to the switch 37 as the open-close control signal.

Also, in cases where the magnetic reproducing apparatus according to the present invention is operated at a reproducing mode other than the seven or minus five times reproducing speed (N=+7 or -5) for the video signals recorded at the long time play mode, the movable contacting point Pv of the change-over switch 43 is connected to the fixed contacting point Pb of the change-over switch 43, a signal which is set to the low level condition in case of the FF reproducing operation for the video signals recorded at the long time play mode and is set to the high level condition in case of the FR reproducing operation for the video signals recorded at the long time play mode is fed from the movable contacting point Pv of the change-over switch 43 to both the switch 38 as an open-close control signal and the inverter 39. Therefore, the switches 37 and 38 are set to the "on" condition when the open-close control signal is set to the high level condition.

Waveforms of the signals Ssj and DFF input to the pulse generating unit 20 and the signal Sij output from the pulse generating unit 20 are shown in Figs 12(b) to 12(j). In cases where the magnetic reproducing apparatus according to the present invention is operated at the three or seven times reproducing speed (N=+3 or +7) to produce the video signals recorded at the long time play mode, as shown in Fig. 12(c), because a level of the signal Ssj generated in the luminance signal processing circuit 3 is changed at a time that one rotational magnetic head scanning the magnetic tape is changed to the other rotational magnetic head, the mono-stable multivibrator 35 is triggered (-T) at a time that the level of the signal Ssj is fallen, and the mono-stable multivibrator 36 is triggered (+T) at a time that the level of the signal Ssj is risen. Thereafter, a signal output from the mono-stable multivibrator 35 is fed to the switch 37, and a signal output from the mono-stable multivibrator 36 is fed to the switch 38.

Thereafter, the signals passing though the switches 37 and 38 are combined, a combined signal is frequency-divided in the flip-flop 40, and a frequency-divided signal is fed to the chrominance signal correcting circuit 7 through the fixed and movable contacting points Pa and Pv of the change-over switch 41. That is, the signal Sij shown in Fig. 12(g) is obtained in the flip-flop 40 and is fed to the chrominance signal correcting circuit 7 in cases where the magnetic tape is travelled at the three times reproducing speed (N=+3), and the signal Sij shown in Fig. 12(i) is obtained in the flip-flop 40 and is fed to the chrominance signal correcting circuit 7 in cases where the magnetic tape is travelled at the seven times reproducing speed (N=+7). Thereafter, a phase of the chrominance signal fed from the analog digital converter 6 is inverted in the chrominance signal correcting circuit 7 in a period that the signal Sij is set to the high level condition.

Also, in cases where the magnetic reproducing apparatus according to the present invention is operated at the five or nine times reproducing speed (N=+5 or +9) to reproduce the video signals recorded at the long time play mode, as shown in Fig. 12(d), a level of the signal Ssj generated in the luminance signal processing circuit 3 is maintained to the low level condition. That is, the level of the signal Ssj is not changed when one rotational magnetic head scanning the magnetic tape is changed to the other rotational magnetic head. Therefore, in cases where the magnetic reproducing apparatus according to the present invention is operated at the five or minus three times reproducing speed (N=+5 or -3) to reproduce the video signals recorded at the long time play mode, the movable contacting point Pv of the change-over switch 41 is connected to the fixed contacting point Pb of the change-over switch 41, and the drum rotation reference phase signal DFF fed to the pulse generating unit 20 through an input terminal 18 is fed to the chrominance signal correcting circuit 7 through the fixed and movable contacting points Pb and Pv of the change-over switch 41. Therefore, the signal Sij shown in Fig. 12(h) of which a phase is the same as that of the signal DFF is fed to the chrominance signal correcting circuit 7. Thereafter, a phase of the chrominance signal fed from the analog digital converter 6 is inverted in the chrominance signal correcting circuit 7 in a period that the signal Sij is set to the high level condition.

Also, in cases where the magnetic reproducing apparatus according to the present invention is operated at the nine times reproducing speed (N=+9) to reproduce the video signals recorded at the long time play mode, as shown in Fig. 12(d), the movable contacting point Pv of the change-over switch 41 is connected to the fixed contacting point Pa of the change-over switch 41. In this case, because the level of the signal Ssj is not at a changing-over time of the rotational magnetic heads in cases where the magnetic reproducing apparatus according to the present invention is operated at the five or nine times reproducing speed (N=+5 or +9) to reproduce the video signals recorded at the long time play mode, a signal level at the fixed contacting point Pa of the change-over switch 41 to which the movable contacting point Pv of the change-over switch 41 is connected is maintained to the low level condition, so that the signal Sij shown in Fig. 12(j) is fed to the chrominance signal correcting circuit 7. Therefore, a phase of the chrominance signal fed from the analog digital converter 6 is not inverted in the chrominance signal correcting circuit 7 in cases where the magnetic reproducing apparatus according to the present invention is operated at the nine times reproducing speed (N=+9) to reproduce the video signals recorded at the long time play mode.

In the first embodiment, a skew detecting circuit (corresponding to the luminance signal processing circuit 3) for detecting a skew occurring in an image reproduced from the PAL type video signals and a line alternating property detecting circuit (corresponding to the pulse generating circuit 20) for detecting whether or not the line alternating property of the line information reproduced is maintained are arranged in the magnetic reproducing apparatus. Therefore, an embodiment in which the occurrence of a skew and the loss of the line alternating property are prevented in a magnetic reproducing apparatus on condition that either a skew detecting circuit or a line alternating property detecting circuit is not arranged in the magnetic reproducing apparatus is described.

### (Second Embodiment)

Fig. 16 is an explanatory view of a magnetic reproducing apparatus according to a second embodiment of the present invention. Hereinafter, constitutional elements which are identical with the elements used in the first embodiment are indicated by the same reference signs as those in the first embodiment, and a duplicated explanation is omitted.

As shown in Fig. 16, a magnetic reproducing apparatus 100 comprises
a drum assembly (hereinafter, called a rotational drum) DA on which a magnetic tape T with a plurality of patterned tracks indicating PAL or SECAM television type video signals recorded at a long time recording speed in the long time play mode is wound, the long time recording speed being lower than a standard recording speed at which the magnetic tape T is run in a normal recording operation,
a pair of magnetic heads H1 and H2 attached on the rotational drum DA to be spaced at 180 degrees apart,
a lower drum Dd placed in the lower side of the rotational drum DA,
a lead ring Lr for leading the magnetic tape T to the rotational drum DA to determine a winding position of the magnetic tape T,
a tape running circuit 101 for running the magnetic tape T,
a control processing unit (CPU) 102 for controlling the tape running circuit 101 to run the magnetic tape T at a high reproducing speed (8M+1) times (M is an integral number) as fast as the long time recording speed and controlling mechanism elements composed of the rotational drum DA, the pair of magnetic heads H1 and H2 and the lead ring Lr to place each of the scanning loci drawn by the rotational magnetic heads H1 and H2 on only one patterned track of the magnetic tape,
a luminance signal processing circuit 103 for processing each of the video signals read out from the magnetic tape T through the magnetic heads H1 and H2 and reproducing and demodulating a luminance signal from each video signal,
a chrominance signal processing circuit 104 for processing each of the video signals read out from the magnetic tape T through the magnetic heads H1 and H2 and reproducing and demodulating a chrominance signal from each video signal,
an adder (hereinafter, called an Y/C multiplexing unit) 105 for frequency-multiplexing each of the luminance signals reproduced in the luminance signal processing circuit 103 and each of the chrominance signals reproduced in the chrominance signal processing circuit 104 to produce a plurality of composite video signals, and
an image reproducing unit 106 for reproducing an image from the composite video signals.

Also, the magnetic reproducing apparatus 100 further comprises an audio signal processing circuit (not shown) for processing an audio signal read out from the magnetic tape T through the magnetic heads H1 and H2 to reproduce the audio signal.

In the above configuration, in cases where an instruction indicating a special reproducing operation is input to an input unit (not shown) of the magnetic reproducing apparatus 100 when a video signal is read out from the magnetic tape T and is reproduced in a normal reproducing operation, the instruction is fed to the CPU 102, a running control signal Src is fed from the CPU 102 to the tape running circuit 101, and a mechanism control signal Smc is fed from the CPU 102 to the mechanism elements. Because a magnetic tape actuating element such as a capstan motor is arranged in the tape running circuit 101, a running speed of the magnetic tape T is changed from a standard reproducing speed to a special reproducing speed by the tape running circuit 101 according to the running control signal Src.

Also, the lower drum Dd and the lead ring Lr of the mechanism elements are moved according to the mechanism control signal Smc, and a rotation axis (not shown) of the rotational drum DA is inclined to adjust a scanning locus of each of the magnetic heads H1 and H2. Therefore, as shown in Fig. 2, each scanning locus agrees with one patterned track in the special reproducing operation, and the magnetic heads H1 and H2 can alternately scan the patterned tracks of the magnetic tape T one after another with accuracy in the special reproducing operation. That is, a noise bar occurring in a reproduced image in the high speed reproducing operation can be prevented. In this case, the magnetic tape T is run at a high reproducing speed (8M+1) times (M is an integral number) as fast as the long time recording speed, under the control of the CPU 102.

The reason that the magnetic tape T is run at the (8M+1) times reproducing speed is described. As is described above, in cases where the value M is an even number in the special reproduction of the (4M+1) times reproducing speed, an increased or decreased number of the line information reproduced from each track becomes an even number, so that any skew does not occurs and the line alternating property in the reproduced chrominance signals is maintained. That is, because a value (4M+1) is expressed by a value (8L+1) (M=2L, L is an integral number) when the value M is an even number, the occurrence of a skew and the loss of the line alternating property in the chrominance signals can be prevented in cases where a reproducing speed of the magnetic tape T is set to the (8M+1) times reproducing speed (M is an odd or even number).

Also, in cases where the value M is an odd number in the special reproduction of the (4M+1) times reproducing speed, because the line alternating property in the chrominance signals is lost (or inverted) at a time that one magnetic head scanning a patterned track is changed to the other rotational magnetic head, a phase of a chrominance signal is adversely influenced. Because, the value (4M+1) is expressed by a value (8L+5) (M=2L+1), the (4M+1) times reproducing speed (M is limited to the odd number) is expressed by the (8M+5) times reproducing speed (M is an odd or even number). In addition, in case of the special reproduction of the (4M+3) times reproducing speed, a fraction of the 0.5 H time-period is included in an increased or decreased number of the line information reproduced from each track, so that a skew occurs in the reproduced image and the line alternating property in the chrominance signals is adversely influenced to decolor the reproduced image. An estimation for the occurrence of a skew and/or the occurrence of decoloration in the special reproducing operation at the (8M+1), (8M+5) or (4M+3) times reproducing speed is shown in Fig. 17 for the PAL type video signals and the SECAM type video signals according to the second embodiment.

Thereafter, the video signals read out from the magnetic tape T through the magnetic heads H1 and H2 are fed to the luminance signal processing circuit 103 and the chrominance signal processing circuit 104. In the luminance signal processing circuit 103, a plurality of luminance signals frequency-modulated are extracted from the video signals and are frequency-demodulated, and the luminance signals are reproduced. In the chrominance signal processing circuit 104, a plurality of chrominance signals converted into low band signals are extracted from the video signals and are reproduced. Thereafter, the reproduced luminance signals and the reproduced chrominance signals are fed from the circuits 103 and 104 to the Y/C multiplexing unit 105 and are frequency-multiplexed to form a plurality of composite video signals. Therefore, an image can be reproduced from the composite video signals.

Accordingly, in cases where the magnetic tape T is run at the high reproducing speed (8M+1) times as fast as the long time recording speed under the control of the CPU 102, a reproduced image in which the occurrence of a skew and the occurrence of decoloration are prevented can be obtained.

### (Third Embodiment)

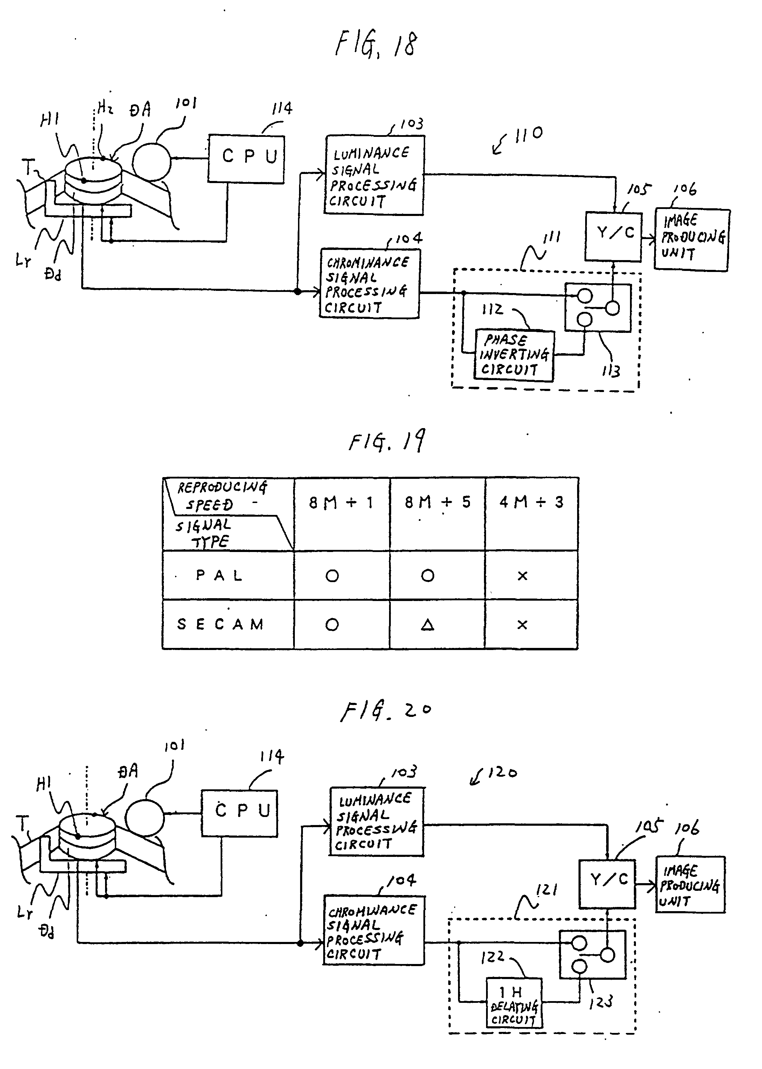

Fig. 18 is an explanatory view of a magnetic reproducing apparatus according to a third embodiment of the present invention.

As shown in Fig. 18, a magnetic reproducing apparatus 110 comprises
the rotational drum DA, the pair of magnetic heads H1 and H2, the lower drum Dd, the lead ring Lr, the tape running circuit 101 for running the magnetic tape T,
a CPU 114 for controlling the tape running circuit 101 to run the magnetic tape T at a high reproducing speed (8M+1) or (8M+5) times as fast as the long time recording speed and controlling the mechanism elements to place each of the scanning loci drawn by the rotational magnetic heads H1 and H2 on only one patterned track of the magnetic tape,
the luminance signal processing circuit 103 for processing each of the PAL type video signals read out from the magnetic tape T through the magnetic heads H1 and H2 and reproducing and demodulating a luminance signal from each video signal,
the chrominance signal processing circuit 104 for processing each of the PAL type video signals read out from the magnetic tape T through the magnetic heads H1 and H2 and reproducing and demodulating a chrominance signal from each video signal,
a chrominance signal correcting circuit 111 for correcting a phase of each chrominance signal reproduced in the chrominance signal processing circuit 104 to prevent the occurrence of decoloration in the reproduced image on condition that the magnetic tape T is run at the high reproducing speed (8M+5) times as fast as the long time recording speed under the control of the CPU 114,
the Y/C multiplexing unit 105 for frequency-multiplexing each of the luminance signals reproduced in the luminance signal processing circuit 103 and each of the chrominance signals corrected in the chrominance signal correcting circuit 111 to produce a plurality of composite video signals, and
the image producing unit 106.

The chrominance signal correcting circuit 111 comprises
a phase inverting circuit 112 for inverting a phase of a color difference signal R-Y existing as one of components (or as a R-Y axis) in each chrominance signal reproduced in the chrominance signal processing circuit 104 to form an inverted chrominance signal, and
a change-over circuit 113 for alternately selecting a series of chrominance signals reproduced in the chrominance signal processing circuit 104 and a series of inverted chrominance signals obtained in the phase inverting circuit 112 under the control of the CPU 114 each time one magnetic head scanning the magnetic tape is changed to the other rotational magnetic head and alternately outputting the selected series of chrominance signals and the selected series of inverted chrominance signals.

In the above configuration, in cases where the chrominance signals are read out from the magnetic tape T in the special reproducing operation on condition that a reproducing speed of the magnetic tape T is set to the (8M+1) times reproducing speed, because an increased or decreased number of the video signals read out from each track is an even number as is described in the second embodiment (refer to Fig. 6(C)), the line alternating property in the chrominance signals is not inverted, and a fraction of the 0.5 H time-period is not included in the increased or decreased number of the video signals. Therefore, the change-over circuit 113 is adjusted by the CPU 114 to directly connect the Y/C multiplexing unit 105 with the chrominance signal processing circuit 104, the reproduced chrominance signals are fed from the chrominance signal processing circuit 104 to the Y/C multiplexing unit 105 through the change-over circuit 113 without processed in the phase inverting circuit 112, each composite video signal is produced from one reproduced chrominance signal and one reproduced luminance signal fed from the luminance signal processing circuit 103 in the Y/C multiplexing unit 105 in the same manner as in the second embodiment, and a reproduced image is produced from the composite video signals.

Therefore, any skew does not occur in the reproduced image, and decoloration of the reproduced image does not occur.

In contrast, in cases where the PAL type video signals are read out from the magnetic tape T in the special reproducing operation on condition that a reproducing speed of the magnetic tape T is set to the (8M+5) times reproducing speed, because an increased or decreased number of the video signals read out from each track is an odd number (refer to Fig. 6(B)), the line alternating property in the chrominance signals is inverted each time one magnetic head scanning the magnetic tape is changed to the other rotational magnetic head. To prevent the inversion of the line alternating property, the change-over circuit 113 is adjusted by the CPU 114 to alternately select a first connection of the Y/C multiplexing unit 105 with the chrominance signal processing circuit 104 and a second connection of the Y/C multiplexing unit 105 with the phase inverting circuit 112 each time one magnetic head scanning the magnetic tape is changed to the other rotational magnetic head.

Thereafter, each reproduced chrominance signal of which one component such as a color difference signal R-Y is inverted is output from the chrominance signal processing circuit 104 to the phase inverting circuit 112 and the change-over circuit 113, a phase of one color difference signal R-Y existing as one component in each reproduced chrominance signal is inverted in the phase inverting circuit 112 to produce a plurality of inverted chrominance signals, a series of chrominance signal reproduced in the chrominance signal processing circuit 104 and a series of inverted chrominance signal obtained in the phase inverting circuit 112 are alternately selected by the change-over circuit 113 each time one magnetic head scanning the magnetic tape is changed to the other rotational magnetic head, the reproduced luminance signals fed from the luminance signal processing circuit 103 and the selected series of chrominance signals or the selected series of inverted chrominance signals are frequency-multiplex ed in the Y/C multiplexing unit 105, and a plurality of composite video signals are reproduced. Therefore, an image can be reproduced from the composite video signals.

Accordingly, in cases where the magnetic tape T is run at the high reproducing speed (8M+1) or (8M+5) times as fast as the long time recording speed under the control of the CPU 114, a reproduced image in which the occurrence of a skew and the occurrence of decoloration are prevented can be obtained.

In the SECAM type video signals, because one color difference signal modulated is transmitted every other video signal, the third embodiment is not effective for the SECAM type video signals. Also, a fraction of the 0.5 H time-period is included in an increased or decreased number of the line information reproduced from each track in case of the special reproducing operation at the (4M+3) times reproducing speed, a skew occurs in the reproduced image. An estimation for the occurrence of a skew and/or the occurrence of decoloration in the special reproducing operation at the (8M+1), (8M+5) or (4M+3) times reproducing speed is shown in Fig. 19 for the PAL type video signals and the SECAM type video signals according to the third embodiment.

### (Fourth Embodiment)

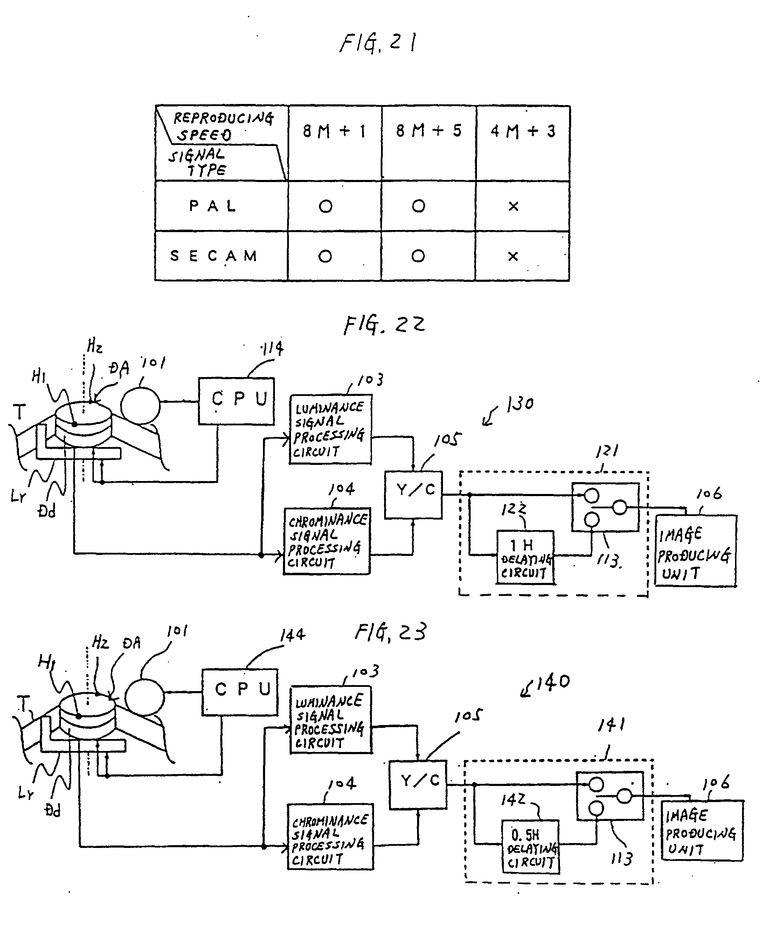

Fig. 20 is an explanatory view of a magnetic reproducing apparatus according to a fourth embodiment of the present invention.

As shown in Fig. 20, a magnetic reproducing apparatus 120 comprises
the rotational drum DA, the pair of magnetic heads H1 and H2, the lower drum Dd, the lead ring Lr, the tape running circuit 101 for running the magnetic tape T, the CPU 114,
the luminance signal processing circuit 103 for processing each of the PAL or SECAM type video signals read out from the magnetic tape T through the magnetic heads H1 and H2 and reproducing and demodulating a luminance signal from each video signal,
the chrominance signal processing circuit 104 for processing each of the PAL or SECAM type video signals read out from the magnetic tape T through the magnetic heads H1 and H2 and reproducing and demodulating a chrominance signal from each video signal,
a chrominance signal correcting circuit 121 for correcting each chrominance signal reproduced in the chrominance signal processing circuit 104 to prevent the occurrence of decoloration in the reproduced image on condition that the magnetic tape T is run at the high reproducing speed (8M+5) times as fast as the long time recording speed under the control of the CPU 114,
the Y/C multiplexing unit 105 for frequency-multiplexing each of the luminance signals reproduced in the luminance signal processing circuit 103 and each of the chrominance signals corrected in the chrominance signal correcting circuit 121 to produce a plurality of composite video signals, and
the image producing unit 106.

The chrominance signal correcting circuit 121 comprises
an 1H delaying circuit 122 for delaying each of the chrominance signals reproduced in the chrominance signal processing circuit 104 by the 1 H time-period recorded on the magnetic tape T to produce a plurality of delayed chrominance signals, and
the change-over circuit 113 for alternately selecting a series of chrominance signals reproduced in the chrominance signal processing circuit 104 and a series of delayed chromihance signals obtained in the 1H delaying circuit 122 under the control of the CPU 114 each time one magnetic head scanning the magnetic tape is changed to the other rotational magnetic head and alternately outputting the selected series of chrominance signals and the selected series of delayed chrominance signals to the Y/C multiplexing unit 105.

In the above configuration, in cases where the PAL or SECAM type video signals are read out from the magnetic tape T in the special reproducing operation on condition that a reproducing speed of the magnetic tape T is set to the (8M+5) times reproducing speed, because an increased or decreased number of the video signals read out from each track is an odd number (refer to Fig. 6(B)), the line alternating property in the chrominance signals is inverted each time one magnetic head scanning the magnetic tape is changed to the other rotational magnetic head. To prevent the inversion of the line alternating property, the change-over circuit 113 is adjusted by the CPU 114 to alternately select a first connection of the Y/C multiplexing unit 105 with the chrominance signal processing circuit 104 and a second connection of the Y/C multiplexing unit 105 with the 1H delaying circuit 122 each time one magnetic head scanning the magnetic tape is changed to the other rotational magnetic head.

Thereafter, the reproduced chrominance signals are output from the chrominance signal processing circuit 104 to the 1H delaying circuit 122 and the change-over circuit 113, each of the reproduced chrominance signals is delayed in the 1H delaying circuit 122 by the 1 H time-period to produce a plurality of delayed chrominance signals, a series of chrominance signals reproduced in the chrominance signal processing circuit 104 and a series of delayed chrominance signals obtained in the 1H delaying circuit 122 are alternately selected by the change-over circuit 113 each time one magnetic head scanning the magnetic tape is changed to the other rotational magnetic head, the reproduced luminance signals fed from the luminance signal processing circuit 103 and the chrominance signals or the delayed chrominance signals selected by the change-over circuit 113 are frequency-multiple xed in the Y/C multiplexing unit 105, and a series of composite video signals is reproduced from a series of reproduced luminance signals and the selected series of chrominance signals or the selected series of delayed chrominance signals for each patterned track. Therefore, an image can be reproduced from the composite video signals.

Also, in cases where the video signals are read out from the magnetic tape T in the special reproducing operation on condition that a reproducing speed of the magnetic tape T is set to the (8M+1) times reproducing speed, an image is reproduced in the same manner as in the second embodiment. That is, the change-over circuit 113 is adjusted by the CPU 114 to directly connect the Y/C multiplexing unit 105 with the chrominance signal processing circuit 104, the chrominance signals reproduced in the circuit 104 are always fed to the Y/C multiplexing unit 105 without processed in the 1H delaying circuit 122.

Accordingly, in cases where the magnetic tape T is run at the high reproducing speed (8M+1) or (8M+5) times as fast as the long time recording speed under the control of the CPU 114, a reproduced image in which the occurrence of a skew and the occurrence of decoloration are prevented can be obtained.

Also, though one color difference signal modulated is transmitted every other SECAM type video signal, the fourth embodiment is effective for the SECAM type video signals.

An estimation for the occurrence of a skew and/or the occurrence of decoloration in the special reproducing operation at the (8M+1), (8M+5) or (4M+3) times reproducing speed is shown in Fig. 21 for the PAL type video signals and the SECAM type video signals according to the fourth embodiment.

Next, a modification of the fourth embodiment is shown in Fig. 22. As a magnetic reproducing apparatus 130 is shown in Fig. 22, the reproduced chrominance signal is not delayed in the 1H delaying circuit 122, but the composite video signal produced in the Y/C multiplexing unit 105 is delayed in the 1H delaying circuit 122 of the chrominance signal correcting circuit 121. In this modification, a reproduced image in which the occurrence of a skew and the occurrence of decoloration are prevented can be obtained in cases where the magnetic tape T is run at the high reproducing speed (8M+1) or (8M+5) times as fast as the long time recording speed.

### (Fifth Embodiment)

Fig. 23 is an explanatory view of a magnetic reproducing apparatus according to a fifth embodiment of the present invention.

As shown in Fig. 23, a magnetic reproducing apparatus 140 comprises
the rotational drum DA, the pair of magnetic heads H1 and H2, the lower drum Dd, the lead ring Lr, the tape running circuit 101 for running the magnetic tape T,
the CPU 144 for controlling the tape running circuit 101 to run the magnetic tape T at a high reproducing speed (8M+1) or (4M+3) times as fast as the long time recording speed and controlling the mechanism elements to place each of the scanning loci drawn by the rotational magnetic heads H1 and H2 on only one patterned track of the magnetic tape,
the luminance signal processing circuit 103 for processing each of the PAL or SECAM type video signals read out from the magnetic tape T through the magnetic heads H1 and H2 and reproducing and demodulating a luminance signal from each video signal,
the chrominance signal processing circuit 104 for processing each of the PAL or SECAM type video signals read out from the magnetic tape T through the magnetic heads H1 and H2 and reproducing and demodulating a chrominance signal from each video signal,
the Y/C multiplexing unit 105 for frequency-multiplexing each of the luminance signals reproduced in the luminance signal processing circuit 103 and each of the chrominance signals reproduced in the chrominance signal processing circuit 104 to produce a plurality of composite video signals,
a signal correcting circuit 141 for correcting each composite video signal produced in the Y/C multiplexing unit 105 to prevent the occurrence of a skew in the reproduced image on condition that the magnetic tape T is run at the high reproducing speed (4M+3) times as fast as the long time recording speed under the control of the CPU 144, and
the image producing unit 106.

The chrominance signal correcting circuit 141 comprises
a 0.5H delaying circuit 142 for delaying each of the composite video signals produced in the Y/C multiplexing unit 105 by the 0.5 H time-period to produce a plurality of delayed composite video signals, and
the change-over circuit 113 for alternately selecting a series of composite video signal produced in the Y/C multiplexing unit 105 and a series of delayed composite video signal obtained in the 0.5H delaying circuit 142 under the control of the CPU 144 each time one magnetic head scanning the magnetic tape is changed to the other rotational magnetic head and alternately outputting the selected series of composite video signal and the selected series of delayed composite video signal.

In the above configuration, in cases where the PAL or SECAM type video signals are read out from the magnetic tape T in the special reproducing operation on condition that a reproducing speed of the magnetic tape T is set to the (4M+3) times reproducing speed, because an increased or decreased number of the video signals read out from each track is, for example, 1.5 (refer to Fig. 7(D)), a fraction of the 0.5 H time-period is generated in the increased or decreased number of the video signals each time one magnetic head scanning the magnetic tape is changed to the other rotational magnetic head, so that a skew is produced in a reproduced image. To prevent the occurrence of the skew, the change-over circuit 113 is adjusted by the CPU 144 to alternately output a series of composite video signals produced in the Y/C multiplexing unit 105 and a series of delayed composite video signals produced in the 0.5H delaying circuit 142 each time one magnetic head scanning the magnetic tape is changed to the other rotational magnetic head.

Thereafter, each of the composite video signals produced in the Y/C multiplexing unit 105 in the same manner as in the second embodiment is output to the 0.5H delaying circuit 142 and the change-over circuit 113, each of the composite video signals is delayed in the 0.5H delaying circuit 142 by the 0.5 H time-period to produce a plurality of delayed composite video signals, a series of composite video signals produced in the Y/C multiplexing unit 105 and a series of delayed composite video signals obtained in the 0.5H delaying circuit 142 are alternately selected in the change-over circuit 113 each time one magnetic head scanning the magnetic tape is changed to the other rotational magnetic head, and the selected series of composite video signals and the selected series of delayed composite video signals are alternately output to produce an image.

Accordingly, because an image is reproduced by alternately selecting a series of composite video signals produced in the Y/C multiplexing unit 105 and a series of delayed composite video signals obtained in the 0.5H delaying circuit 142 each time one magnetic head scanning the magnetic tape is changed to the other rotational magnetic head, a fraction of the 0.5 H time-period is not included in an increased or decreased number of the video signals reproduced in the magnetic reproducing apparatus 140. Therefore, even though the PAL or SECAM type video signals are read out from the magnetic tape T in the special reproducing operation on condition that a reproducing speed of the magnetic tape T is set to the (4M+3) times reproducing speed, the occurrence of a skew in the reproduced image can be prevented. However, because the line alternating property in the chrominance signals is not maintained, the reproduced image is decolored.

In cases where the video signals are read out from the magnetic tape T in the special reproducing operation on condition that a reproducing speed of the magnetic tape T is set to the (8M+1) times reproducing speed, an image is reproduced in the same manner as in the second embodiment.

Also, in cases where the video signals are read out from the magnetic tape T in the special reproducing operation on condition that a reproducing speed of the magnetic tape T is set to the (8M+5) times reproducing speed, the occurrence of decoloration in the reproduced image cannot be prevented in the same manner as in the second embodiment.

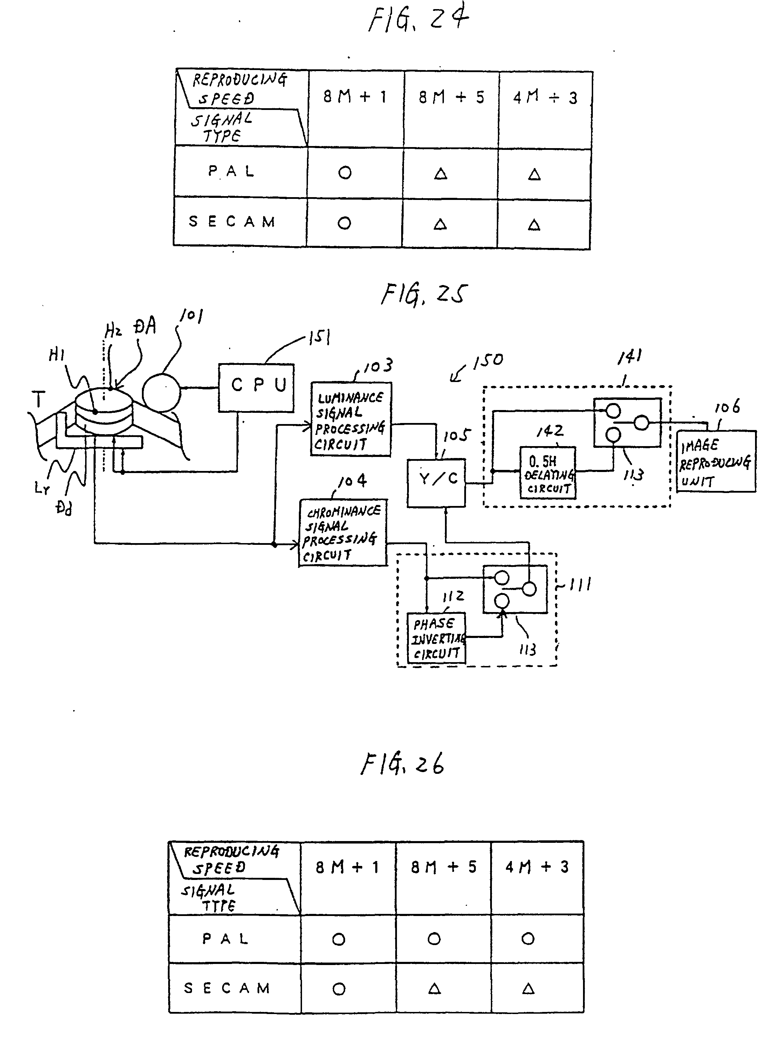

An estimation for the occurrence of a skew and/or the occurrence of decoloration in the special reproducing operation at the (8M+1), (8M+5) or (4M+3) times reproducing speed is shown in Fig. 24 for the PAL type video signals and the SECAM type video signals according to the fifth embodiment.

### (Sixth Embodiment)

Fig. 25 is an explanatory view of a magnetic reproducing apparatus according to a sixth embodiment of the present invention.

As shown in Fig. 25, a magnetic reproducing apparatus 150 comprises
the rotational drum DA, the pair of magnetic heads H1 and H2, the lower drum Dd, the lead ring Lr, the tape running circuit 101 for running the magnetic tape T,
the CPU 151 for controlling the tape running circuit 101 to run the magnetic tape T at a high reproducing speed (8M+1), (8M+5) or (4M+3) times as fast as the long time recording speed and controlling the mechanism elements to place each of the scanning loci drawn by the rotational magnetic heads H1 and H2 on only one patterned track of the magnetic tape,
the luminance signal processing circuit 103 for processing each of the PAL or SECAM type video signals read out from the magnetic tape T through the magnetic heads H1 and H2 and reproducing and demodulating a luminance signal from each video signal,
the chrominance signal processing circuit 104 for processing each of the PAL or SECAM type video signals read out from the magnetic tape T through the magnetic heads H1 and H2 and reproducing and demodulating a chrominance signal from each video signal,
the chrominance signal correcting circuit 111 for correcting a phase of each chrominance signal reproduced in the chrominance signal processing circuit 104 to prevent the occurrence of decoloration in the reproduced image on condition that the magnetic tape T is run at the high reproducing speed (8M+5) or (4M+3) times as fast as the long time recording speed under the control of the CPU 151,
the Y/C multiplexing unit 105 for frequency-multiplexing each of the luminance signals reproduced in the luminance signal processing circuit 103 and each of the chrominance signals corrected in the chrominance signal correcting circuit 111 to produce a plurality of composite video signals,
the signal correcting circuit 141 for correcting each composite video signal produced in the Y/C multiplexing unit 105 to prevent the occurrence of a skew in the reproduced image on condition that the magnetic tape T is run at the high reproducing speed (4M+3) times as fast as the long time recording speed under the control of the CPU 151, and
the image producing unit 106.

In the above configuration, in cases where the PAL or SECAM type video signals are read out from the magnetic tape T in the special reproducing operation on condition that a reproducing speed of the magnetic tape T is set to the (8M+5) or (4M+3) times reproducing speed, a plurality of composite video signals are reproduced in the Y/C multiplexing unit 105 in the same manner as in the third embodiment.

Thereafter, in cases where the PAL or SECAM type video signals are read out on condition that the reproducing speed of the magnetic tape T is set to the (4M+3) times reproducing speed, a series of composite video signals produced in the Y/C multiplexing unit 105 and a series of delayed composite video signals obtained in the 0.5H delaying circuit 142 are alternately selected in the change-over circuit 113 each time one magnetic head scanning the magnetic tape is changed to the other rotational magnetic head in the same manner as in the fifth embodiment, and the selected series of composite video signals and the selected series of delayed composite video signals are alternately output to produce an image.

In contrast, in cases where the PAL or SECAM type video signals are read out on condition that the reproducing speed of the magnetic tape T is set to the (8M+5) times reproducing speed, the composite video signals produced in the Y/C multiplexing unit 105 are output through the change-over circuit 113 without processed in the 0.5H delaying circuit 142, and an image is produced from the composite video signals.

In this case, because a series of chrominance signals reproduced in the chrominance signal processing circuit 104 and a series of inverted chrominance signals obtained in the phase inverting circuit 112 are alternately selected by the change-over circuit 113 in case of the (8M+5) and (4M+3) times reproducing speeds each time one magnetic head scanning the magnetic tape is changed to the other rotational magnetic head, the line alternating property in the PAL type chrominance signals is maintained, and the decoloration of the reproduced image is prevented in case of the PAL type chrominance signals.

Also, because the image is reproduced by alternately selecting a series of composite video signals produced in the Y/C multiplexing unit 105 and a series of delayed composite video signals obtained in the 0.5H delaying circuit 142 in case of the (4M+3) times reproducing speed each time one magnetic head scanning the magnetic tape is changed to the other rotational magnetic head, a fraction of the 0.5 H time-period is not included in an increased or decreased number of the video signals reproduced in the magnetic reproducing apparatus 150, and the occurrence of a skew in the reproduced image is prevented.

Accordingly, even though the PAL type video signals are read out from the magnetic tape T in the special reproducing operation on condition that a reproducing speed of the magnetic tape T is set to the (8M+5) or (4M+3) times reproducing speed, the reproduced image in which the decoloration of the reproduced image and the occurrence of a skew in the reproduced image are prevented can be obtained.

Also, even though the SECAM type video signals are read out from the magnetic tape T in the special reproducing operation on condition that a reproducing speed of the magnetic tape T is set to the (8M+5) or (4M+3) times reproducing speed, the reproduced image in which the occurrence of a skew in the reproduced image is prevented can be obtained.

An estimation for the occurrence of a skew and/or the occurrence of decoloration in the special reproducing operation at the (8M+1), (8M+5) or (4M+3) times reproducing speed is shown in Fig. 26 for the PAL type video signals and the SECAM type video signals according to the sixth embodiment.

### (Seventh Embodiment)

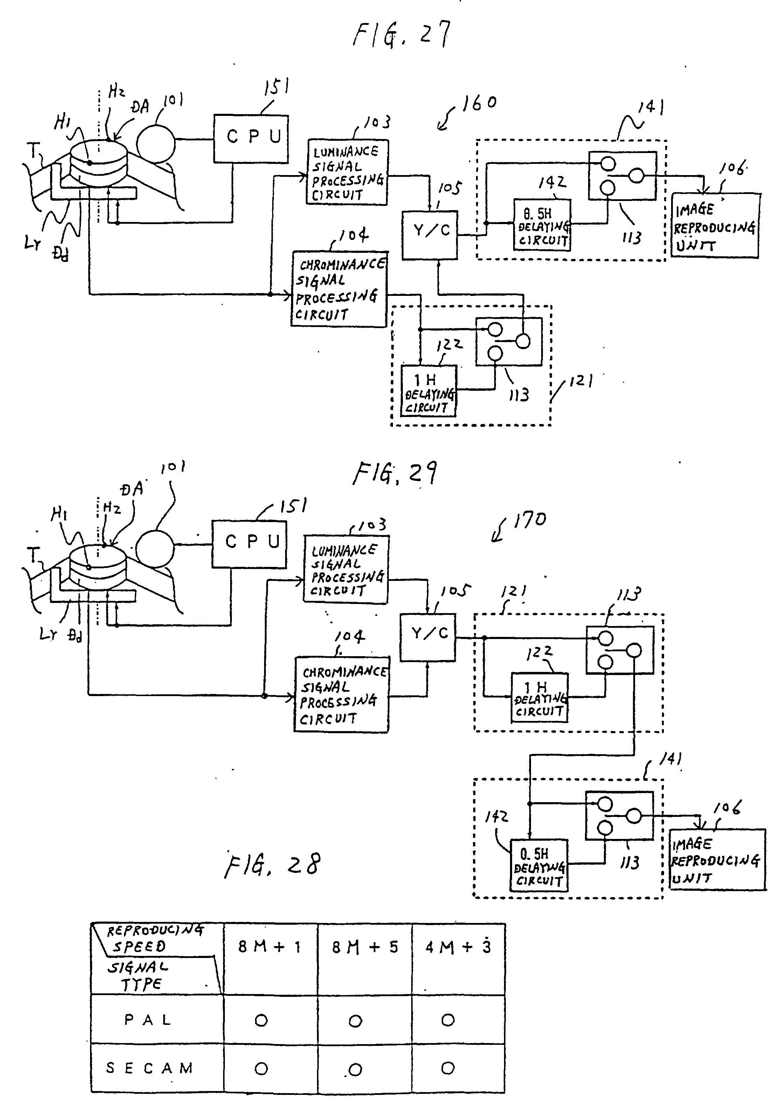

Fig. 27 is an explanatory view of a magnetic reproducing apparatus according to a seventh embodiment of the present invention.

As shown in Fig. 27, a magnetic reproducing apparatus 160 comprises
the rotational drum DA, the pair of magnetic heads H1 and H2, the lower drum Dd, the lead ring Lr, the tape running circuit 101 for running the magnetic tape T, the CPU 151,
the luminance signal processing circuit 103 for processing each of the PAL or SECAM type video signals read out from the magnetic tape T through the magnetic heads H1 and H2 and reproducing and demodulating a luminance signal from each video signal,
the chrominance signal processing circuit 104 for processing each of the PAL or SECAM type video signals read out from the magnetic tape T through the magnetic heads H1 and H2 and reproducing and demodulating a chrominance signal from each video signal,
the chrominance signal correcting circuit 121 for correcting each chrominance signal reproduced in the chrominance signal processing circuit 104 to prevent the occurrence of decoloration in the reproduced image on condition that the magnetic tape T is run at the high reproducing speed (8M+5) or (4M+3) times as fast as the long time recording speed under the control of the CPU 151,
the Y/C multiplexing unit 105 for frequency-multiplexing each of the luminance signals reproduced in the luminance signal processing circuit 103 and each of the chrominance signals corrected in the chrominance signal correcting circuit 121 to produce a plurality of composite video signals,
the signal correcting circuit 141 for correcting each composite video signal produced in the Y/C multiplexing unit 105 to prevent the occurrence of a skew in the reproduced image on condition that the magnetic tape T is run at the high reproducing speed (4M+3) times as fast as the long time recording speed under the control of the CPU 151, and
the image producing unit 106.

In the above configuration, in cases where the PAL or SECAM type video signals are read out from the magnetic tape T in the special reproducing operation on condition that a reproducing speed of the magnetic tape T is set to the (8M+5) or (4M+3) times reproducing speed, a plurality of composite video signals are reproduced in the Y/C multiplexing unit 105 in the same manner as in the fourth embodiment.

Thereafter, in cases where the PAL or SECAM type video signals are read out on condition that the reproducing speed of the magnetic tape T is set to the (4M+3) times reproducing speed, a series of composite video signals produced in the Y/C multiplexing unit 105 and a series of delayed composite video signals obtained in the 0.5H delaying circuit 142 are alternately selected in the change-over circuit 113 each time one magnetic head scanning the magnetic tape is changed to the other rotational magnetic head in the same manner as in the fifth embodiment, and the selected series of composite video signals and the selected series of delayed composite video signals are alternately output to produce an image.

In contrast, in cases where the PAL or SECAM type video signals are read out on condition that the reproducing speed of the magnetic tape T is set to the (8M+5) times reproducing speed, the composite video signals produced in the Y/C multiplexing unit 105 are output through the change-over circuit 113 without processed in the 0.5H delaying circuit 142, and an image is produced from the composite video signals.

In this case, when a reproducing speed of the magnetic tape T is set to the (4M+3) times reproducing speed, because the image is reproduced by alternately selecting a series of composite video signals produced in the Y/C multiplexing unit 105 and a series of delayed composite video signals obtained in the 0.5H delaying circuit 142 each time one magnetic head scanning the magnetic tape is changed to the other rotational magnetic head, a fraction of the 0.5 H time-period is not included in an increased or decreased number of the video signals reproduced in the magnetic reproducing apparatus 160, and the occurrence of a skew in the reproduced image is prevented.

Also, when a reproducing speed of the magnetic tape T is set to the (8M+5) or (4M+3) times reproducing speed, because a series of chrominance signals reproduced in the chrominance signal processing circuit 104 and a series of delayed chrominance signals obtained in the 1H delaying circuit 122 are alternately selected under the control of the CPU 151 by the change-over circuit 113 each time one magnetic head scanning the magnetic tape is changed to the other rotational magnetic head, the line alternating property in the chrominance signals is maintained, and the decoloration of the reproduced image is prevented.

Accordingly, even though the PAL or SECAM type video signals are read out from the magnetic tape T in the special reproducing operation on condition that a reproducing speed of the magnetic tape T is set to the (8M+5) or (4M+3) times reproducing speed, the reproduced image in which the decoloration of the reproduced image and the occurrence of a skew in the reproduced image are prevented can be obtained.

An estimation for the occurrence of a skew and/or the occurrence of decoloration in the special reproducing operation at the (8M+1), (8M+5) or (4M+3) times reproducing speed is shown in Fig. 28 for the PAL type video signals and the SECAM type video signals according to the seventh embodiment.

Next a modification of the seven embodiment is described with reference to Fig. 29.

As a magnetic reproducing apparatus 170 is shown in Fig. 29, a plurality of composite video signals are produced in the Y/C multiplexing unit 105 in the same manner as in the second embodiment in cases where a reproducing speed of the magnetic tape T is set to the (8M+5) or (4M+3) times reproducing speed. Thereafter, the composite video signals are processed in the chrominance signal correcting circuit 121. Thereafter, the composite video signals are processed in the signal correcting circuit 141 in cases where a reproducing speed of the magnetic tape T is set to the (4M+3) times reproducing speed.

Accordingly, the reproduced image in which the decoloration of the reproduced image and the occurrence of a skew in the reproduced image are prevented can be obtained in the same manner as in the magnetic reproducing apparatus 160. An estimation for the occurrence of a skew and/or the occurrence of decoloration in the special reproducing operation at the (8M+1), (8M+5) or (4M+3) times reproducing speed is shown in Fig. 28.

Next, a concrete chrominance signal correction for correcting the line alternating property in the chrominance signals in the special reproducing operation (particularly, the high speed reproducing operation) by using the magnetic reproducing apparatus 110, 120, 130, 140, 150, 160 or 170 in which the PAL or SECAM television type video signals recorded on the magnetic tape T at the long time play mode are reproduced is described.

The 1H delaying circuit 122 or the 0.5H delaying circuit 142 is embodied by using a charge coupled device (CCD) delaying circuit. A delaying time in the CCD delaying circuit is determined by a product of an inverse number of a sampling clock frequency and the number of steps in the CCD delaying circuit. In this case, it is required that the sampling clock frequency is two or more times a maximum frequency of a delayed signal. Therefore, in cases where the maximum frequency of the delayed signal is high, a prescribed delaying time cannot be obtained unless the sampling clock frequency is heightened and the number of steps in the CCD delaying circuit is increased. Assuming that a frequency of a sub-carrier of the chrominance signal is the same signal band width as that of a frequency of a low band signal (for example, a signal transmission band width is equal to a sub-carrier frequency ± 500 KHz), it is required that the chrominance signal of any of PAL and SECAM types is delayed by about 5 MHz at its maximum, so that it is required that the sampling clock frequency is 10 MHz or more. Therefore, in cases where the 1 H time-period (64 µsecond) is delayed, the number of required steps in the CCD delaying circuit is 640 (64 µsecond ∗ 10 MHz).

In cases where the chrominance signal is converted to a low band chrominance signal having a low band frequency and the low band chrominance signal is delayed, the sampling clock frequency can be lowered, and the number of required steps in the CCD delaying circuit can be lowered. In cases where the CCD delaying circuit is used at a low band frequency, the PAL type low band chrominance signal converted to the low band has a frequency of 1.2 MHz at its maximum, the SECAM type low band chrominance signal converted to the low band has a frequency of 1.6 MHz at its maximum, and the sampling clock frequency is 3.2 MHz. Therefore, the number of steps required to delay the chrominance signal by 1 H time-period in the CCD delaying circuit is 205 (64 µsecond ∗ 3.2 MHz). In practical use, because a sampling clock frequency in the CCD delaying circuit is usually set to a value I times (I is an integral number) a frequency of the sub-carrier in a VTR, in cases where the chrominance signal of the PAL type video signal is delayed, it is required that the sampling clock frequency in the CCD delaying circuit is three or more times the sub-carrier frequency of the chrominance signal. However, in cases where the chrominance signal is converted to a low band chrominance signal, the sampling clock frequency in the CCD delaying circuit can be reduced to the sub-carrier frequency of the chrominance signal, so that the sampling clock frequency in the CCD delaying circuit required to delay the low band chrominance signal can be reduced to 1/3 the sampling clock frequency required to delay the chrominance signal.

Therefore, embodiments in which each of a plurality of low band converted chrominance signals read out from the magnetic tape T is processed in an chrominance signal correcting circuit are described.

### (Eighth Embodiment)

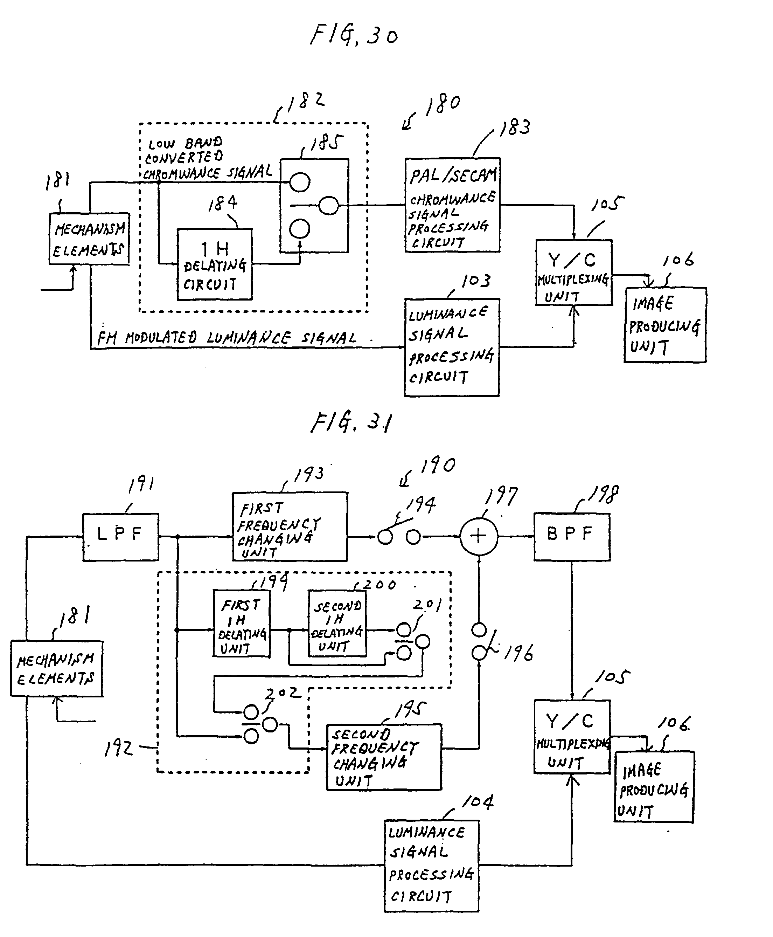

Fig. 30 is a block diagram of a magnetic reproducing apparatus with an chrominance signal correcting circuit according to an eighth embodiment of the present invention.

As shown in Fig. 30, a magnetic reproducing apparatus 180 comprises
the mechanism elements 181 comprising the rotational drum DA, the pair of magnetic heads H1 and H2, the lower drum Dd, the lead ring Lr, the tape running circuit 101 and the CPU 102,
a chrominance signal correcting circuit 182 for correcting each of a plurality of PAL or SECAM type low band converted chrominance signals read out from the magnetic tape T through the magnetic heads H1 and H2 by the mechanism elements 181 to maintain the line alternating property in the low band converted chrominance signals,
the luminance signal processing circuit 104 for processing each of the PAL or SECAM type video signals read out from the magnetic tape T through the magnetic heads H1 and H2 and reproducing and demodulating a luminance signal from each video signal,
a PAL/SECAM chrominance signal processing circuit 183 for frequency-converting each of the PAL or SECAM type low band converted chrominance signals corrected in the chrominance signal correcting circuit 182 and reproducing and demodulating a chrominance signal from each low band converted chrominance signal,
the Y/C multiplexing unit 105 for frequency-multiplexing each of the luminance signals reproduced in the luminance signal processing circuit 104 and each of the chrominance signals reproduced in the chrominance signal processing circuit 183 to produce a plurality of composite video signals, and
the image producing unit 106.

The chrominance signal correcting circuit 182 comprises
an 1H delaying circuit 184 for delaying each of the low band converted chrominance signals by 1 H time-period to produce a plurality of delayed low band converted chrominance signals, and
a change-over circuit 185 for alternately selecting a series of low band converted chrominance signals and a series of delayed low band converted chrominance signals obtained in the 1H delaying circuit 184 under the control of the CPU 102 each time one magnetic head scanning the magnetic tape is changed to the other rotational magnetic head and alternately outputting the selected series of low band converted chrominance signals and the selected series of delayed low band converted chrominance signals.

In the above configuration, a plurality of PAL or SECAM type video signals are read out from the magnetic tape T through the magnetic heads H1 and H2, each of the video signals is demultiplexed to an FM modulated luminance signal and a low band converted chrominance signal in a band pass filter (not shown), each of the FM modulated luminance signals is fed to the luminance signal processing circuit 104 to reproduce a plurality of luminance signal, and each of the low band converted chrominance signals is corrected in the chrominance signal correcting circuit 182 to maintain the line alternating property in the low band converted chrominance signals.

In the chrominance signal correcting circuit 182, each of the low band converted chrominance signals is delayed by 1 H time-period in the 1H delaying circuit 184, and a series of low band converted chrominance signals and a series of delayed low band converted chrominance signals are alternately selected under the control of the CPU 102 in the change-over circuit 185 each time one magnetic head scanning the magnetic tape is changed to the other rotational magnetic head. Therefore, the line alternating property in the low band converted chrominance signals is maintained.

Thereafter, the selected series of low band converted chrominance signals and the selected series of delayed low band converted chrominance signals are alternately output to the chrominance signal processing circuit 183 as a plurality of corrected low band converted chrominance signals, and a frequency-conversion and a crosstalk removal are performed for each of the corrected low band converted chrominance signals in the chrominance signal processing circuit 183. Thereafter, each of the corrected low band converted chrominance signals and each of the luminance signals are multiplexed in the Y/C multiplexing unit 105, a plurality of composite video signals are reproduced, and an image is reproduced.

The crosstalk removal performed in the chrominance signal processing circuit 183 is described in detail. A crosstalk component included in a signal read out from the magnetic tape T is normally removed by using a comb-shaped filter having an 1H delaying circuit. That is, when a plurality of video signals are recorded, a plurality of chrominance signals of the video signals are recorded on the magnetic tape T while shifting a phase of one chrominance signal by 90 degrees every 1 H time-period according to a phase shifting method. In a reproducing operation, each of chrominance signals read out from the magnetic tape T and each of delayed chrominance signals obtained by delaying the chrominance signals in the 1H delaying circuit by the 1 H time-period are added to each other, a pair of crosstalk components of each pair of chrominance signal and delayed chrominance signal are canceled each other. This comb-shaped filter is necessary to perform a chrominance signal processing in the normal VTR, and the crosstalk removal is performed for each of reproduced /demodulated chrominance signals in the comb-shaped filter just before the reproduced/demodulated chrominance signals and reproduced/demodulated luminance signals are frequency-multipl exed.

In this case, because the phase of the crosstalk component of the chrominance signal can be set to an inverted condition every other 1 H time-period according to the phase shift method in case of the NTSC (national television system committee) type television signals, in cases where the 1H delaying circuit is provided for the comb-shaped filter, the crosstalk components of the chrominance signals can be removed by adding each of the reproduced chrominance signals and each of the reproduced chrominance signals delayed by 1 H. However, in case of the PAL type television signals, because a phase of a R-Y color difference signal is inverted by 180 degrees every 1 H time-period, it is required to provide a 2 H delaying circuit for the comb-shaped filter.

Also, the color difference signals of the SECAM type television signals are FM-modulated to sub-carriers and are transmitted, and the SECAM type chrominance signals are frequency-divided to a one-fourth frequency and are recorded in a low band region in the SECAM type signal recording and reproducing VTR in which a signal processing unit useful for the PAL and SECAM type signals is arranged. Therefore, any comb-shaped filter is not used. In addition, there is another VTR in which video signals are reproduced by using a signal processing system common to the SECAM and PAL types. Therefore, in cases where the SECAM type reproduced chrominance signals are corrected by using a comb-shaped filter for the PAL type chrominance signals, the signal correction can be efficiently performed without any new delaying circuit. That is, in cases where the SECAM type television signals are reproduced, a comb-shaped filter used for the reproduction of the PAL type television signals is used as a delaying circuit for the chrominance signal correction.

### (Ninth Embodiment)

In this embodiment, an SECAM type signal reproduced in a VTR in which the SECAM type signal is recorded and reproduced by using a signal processing system used in a signal processing for a PAL type signal is called an MESECAM type signal, and an MESECAM type chrominance signal is corrected in the ninth embodiment.

Fig. 31 is a block diagram of a magnetic reproducing apparatus with an chrominance signal correcting circuit according to a ninth embodiment of the present invention.

As shown in Fig. 31, a magnetic reproducing apparatus 190 comprises
the mechanism elements 181, the luminance signal processing circuit 104,
a low pass filter (LPF) 191 for separating a plurality of low band converted chrominance signals from PAL or MESECAM type video signals read out from the magnetic tape T through the magnetic heads H1 and H2 by the mechanism elements 181 and removing surplus FM frequency components from the low band converted chrominance signals,
a chrominance signal correcting circuit 192 for correcting each of the MESECAM type low band converted chrominance signals output from the LPF 191 to maintain the line alternating property in the low band converted chrominance signals,
a first frequency changing unit 193 for changing a frequency of each PAL type chrominance signal output from the LPF 191,
a switch 194 for passing or stopping the frequency-changed chrominance signals output from the first frequency changing unit 193,
a second frequency changing unit 195 for changing a frequency of each MESECAM type chrominance signal output from the chrominance signal correcting circuit 192,
a switch 196 for passing or stopping the frequency-changed chrominance signals output from the second frequency changing unit 195,
an adder 197 for adding the signals passing through the switches 194 and 196,
a band pass filter (BPF) 198 for removing a noise from each chrominance signal output from the adder 197,
the Y/C multiplexing unit 105 for frequency-multiplexing each of the luminance signals reproduced in the luminance signal processing circuit 104 and each of the chrominance signals output from the BPF 198 to produce a plurality of composite video signals, and
the image producing unit 106.

The chrominance signal correcting circuit 192 comprises
a first 1H delaying unit 199 for delaying each of the MESECAM type low band converted chrominance signals by 1 H time-period,
a second 1H delaying unit 200 for delaying each of the MESECAM type low band converted chrominance signals delayed in the first 1H delaying unit 199 by 1 H time-period,
a first change-over switch 201 for selecting either each of the MESECAM type low band converted chrominance signals delayed in the first 1H delaying unit 199 or each of the MESECAM type low band converted chrominance signals delayed in the second 1H delaying unit 200,
a second change-over switch 202 for selecting either each of the chrominance signals selected in the first change-over switch 201 or each of the chrominance signals output from the LPF 191 and outputting each of the selected chrominance signals to the second frequency changing unit 195.

In the above configuration, in cases where each of the MESECAM type chrominance signals is corrected, the switch 194 is set to "off", and the switch 196 is set to "on".
Thereafter, the low band converted chrominance signals are fed from the LPF 191 to the first 1H delaying unit 199 and the second change-over switch 202. Thereafter, the low band converted chrominance signals are delayed by 1 H time-period in the first 1H delaying unit 199 and pass through the first change-over switch 201, the delayed chrominance signals are selected in the second change-over switch 202, the delayed chrominance signals are frequency-changed in the second frequency changing unit 195, the delayed chrominance signals are fed to the adder 197 through the switch 196, and the delayed chrominance signals are fed to the Y/C multiplexing unit 105 through the BPF 198. Therefore, the MESECAM type chrominance signals in which the line alternating property is corrected and the luminance signals output from the luminance signal processing circuit 104 are frequency-multiplexed in the Y/C multiplexing unit 105, a plurality of composite video signals in which the chrominance signals are corrected are reproduced.

In contrast, in cases where a plurality of MESECAM type chrominance signals in which any correction for maintaining the line alternating property is not required are output from the LPF 191, the chrominance signals are fed to the second frequency changing unit 195 through the second change-over switch 202 without passing any of the 1H delaying units 199 and 200. Therefore, each of the chrominance signals is not delayed. In this case, a first transmission rout for the low band converted chrominance signals from the LPF 191 to the adder 197 through the second change-over switch 202 and the switch 196 is substantially the same as a second transmission rout from the LPF 191 to the adder 197 through the switch 194. However, in cases where the MESECAM type chrominance signals are processed, the first transmission route is preferred because the color correction for the MESECAM type chrominance signals is performed by controlling the first and second change-over switches 201 and 202 without controlling the switch 194. That is, the color correction for the MESECAM type chrominance signals can be simplified because the switch 194 is maintained to "off".

In cases where a plurality of PAL type chrominance signals are processed in the magnetic reproducing apparatus 190, the switch 194 is set to "on", the first change-over switch 201 is set to select the chrominance signals delayed in the second 1H delaying unit 200, and the second change-over switch 202 is set to select the chrominance signals passing through the first change-over switch 201. Therefore, when the PAL type chrominance signals are output from the LPF 191, a group of the first and second 1H delaying units 199 and 200 functions as a comb-type filter, and a crosstalk in each of the PAL type chrominance signals can be removed. In this case, because the group of the first and second 1H delaying units 199 and 200 functions as a comb-type filter, any color correction for the PAL type chrominance signals cannot be performed.

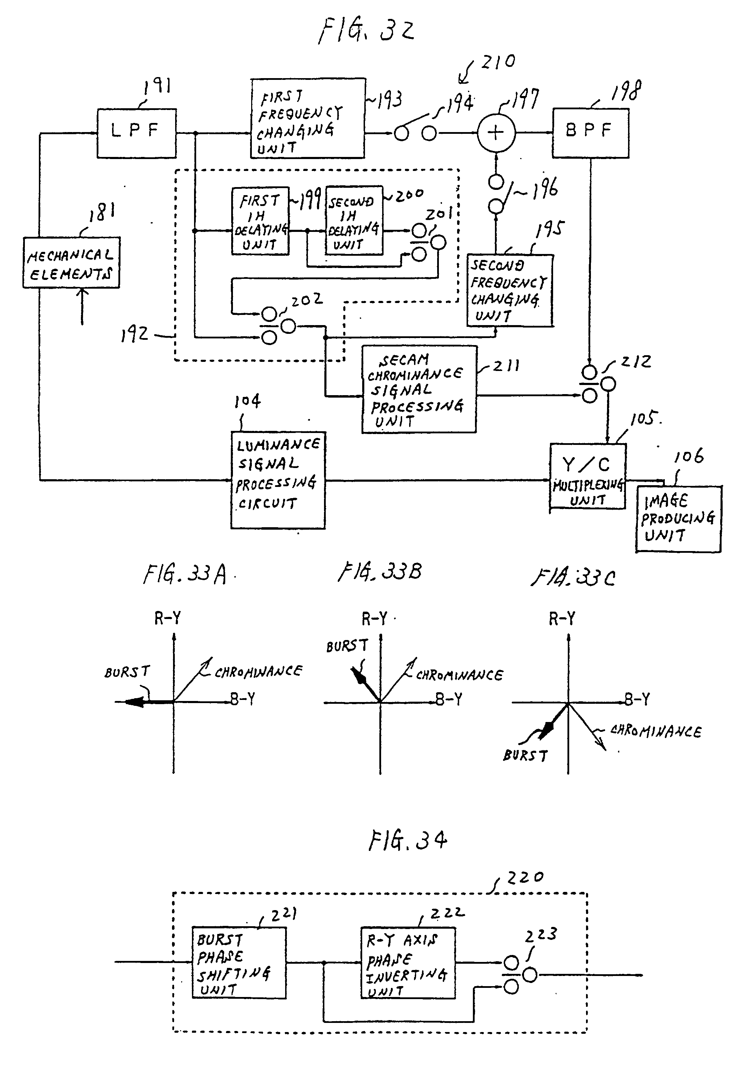

In this embodiment, a signal processing for the MESECAM type chrominance signals and a signal processing for the PAL type chrominance signals are performed in the same signal processing system. However, it is applicable that a signal processing system for a plurality of SECAM type chrominance signals be independently prepared. For example, as shown in Fig. 32, an SECAM chrominance signal processing unit 211 and a third change-over switch 212 are added to the magnetic reproducing apparatus 190, so that a magnetic reproducing apparatus 210 is obtained. In this case, it is applicable that the SECAM chrominance signal processing unit 211 be the same as the PAL/SECAM chrominance signal processing unit 183 shown in Fig. 30.

In the above configuration, in cases where a plurality of MESECAM type chrominance signals in which any correction for maintaining the line alternating property is not required are processed in the magnetic reproducing apparatus 210, the switch 194 and the switch 196 are set to "off", the second change-over switch 202 is set to select the chrominance signals output from the LPF 191, and the third change-over switch 212 is set to select the chrominance signals output from the SECAM chrominance signal processing unit 211. Therefore, when the MESECAM type chrominance signals are output from the LPF 191, the MESECAM type chrominance signals are demodulated in the SECAM chrominance signal processing unit 211, and the demodulated chrominance signals are fed to the Y/C multiplexing unit 105.

Also, in cases where a plurality of SECAM type chrominance signals are corrected in the special reproducing operation, the SECAM type chrominance signals output from the LPF 191 is delayed in the first 1H delaying unit 199 and is fed to the SECAM chrominance signal processing unit 211 through the change-over switches 201 and 202 without being delayed in the second 1H delaying unit 200. Therefore, the line alternating property in the SECAM type chrominance signals can be corrected.

In the VTR in which the PAL type video signals are recorded and reproduced, the SECAM type video signals are processed as is described above. Also, there is a type of VTR having a simple reproducing function in which the NTSC type video signals are transformed into a plurality of pseudo-PAL type video signals and the pseudo-PAL type video signals are processed. In this type of VTR, a plurality of NTSC type video signals are read out from a magnetic tape and are reproduced while the number of NTSC type horizontal synchronizing signals in the NTSC type video signals and a field frequency of the NTSC type video signals are maintained, a chrominance signal sub-carrier frequency of the NTSC type video signals is changed from 3.58 MHz to 4.43361875 MHz, so that a plurality of NTSC type chrominance signals are transformed to a plurality of pseudo-PAL type chrominance signals.

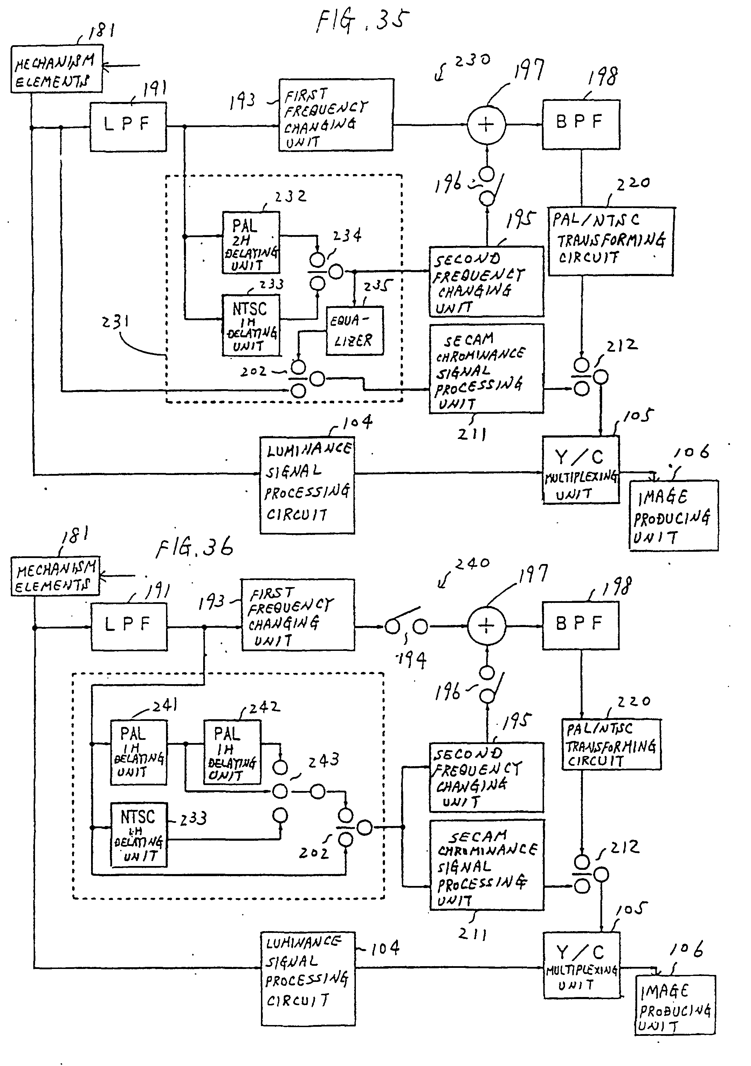

A phase of each NTSC type chrominance signal is shown in Fig. 33A. To transform each NTSC type chrominance signal into one pseudo-PAL type chrominance signal, a burst phase of the NTSC type chrominance signal is delayed by 45 degrees as shown in Fig. 33B (a first step), the R-Y axis for the chrominance signal obtained in the first step is inverted as shown in Fig. 33C (a second step), and the chrominance signal obtained in the first step and the chrominance signal obtained in the second step are alternately output every 1 H time-period (a third step). In this case, a comb-type filter functioning as a 1H delaying unit is used for the NTSC type signal. A PAL/NTSC transforming circuit 220 for transforming the NTSC type chrominance signals into the pseudo-PAL type chrominance signals is shown in Fig. 34. That is, the first step is performed in a burst phase shifting unit 221, the second step is performed in a R-Y axis phase inverting unit 222, and the third step is performed in a change-over switch 223. An example of a chrominance signal processing system for correcting the SECAM type chrominance signals in the VTR having the simple NTSC type video signal reproducing function is shown in Fig. 35.

As shown in Fig. 35, a magnetic reproducing apparatus 230 comprises
the mechanism elements 181, the luminance signal processing circuit 104, the low pass filter (LPF) 191, the first frequency changing unit 193,
a chrominance signal correcting circuit 231 for correcting each of the SECAM type low band converted chrominance signals output from the LPF 191 to maintain the line alternating property in the low band converted chrominance signals,
the second frequency changing unit 195, the switch 196, the adder 197, the band pass filter (BPF) 198,
the PAL/NTSC transforming circuit 220 for transforming the NTSC type chrominance signals output from the BPF 198 in the pseudo-PAL type chrominance signals, the SECAM chrominance signal processing unit 211, the third change-over switch 212, and the Y/C multiplexing unit 105.

The chrominance signal correcting circuit 231 comprises
a PAL 2H delaying unit 232 for delaying each of a plurality of PAL type chrominance signals by 2 H time-period,
an NTSC 1H delaying unit 233 for delaying each of a plurality of NTSC type chrominance signals by 1 H time-period,
a first change-over switch 234 for selecting a series of PAL type chrominance signals delayed in the PAL 2H delaying unit 232 or a series of NTSC type chrominance signals delayed in the NTSC 1H delaying unit 233,
an equalizer 235 for correcting a difference in a delaying time between the PAL type chrominance signal and the NTSC type chrominance signal by setting a delaying time of each of the NTSC type chrominance signals delayed in the NTSC 1H delaying unit 233 to 64 µsecond, and
a second change-over switch 236 for selecting a series of NTSC type chrominance signals output from the equalizer 235 or a series of low band converted chrominance signals read out in the mechanism elements 181.

To correct each of chrominance signals in the chrominance signal correcting circuit 231 without using any additional delaying circuit, it is required to use either the PAL 2H delaying unit 232 corresponding to the PAL type chrominance signals or the NTSC 1H delaying unit 233 corresponding to the NTSC type chrominance signals. In this case, 1 H time-period for the PAL and SECAM type television signals is equal to 64 µsecond, a delaying time in the PAL 2H delaying unit 232 is equal to 64∗2 µsecond, and a delaying time in the NTSC 1H delaying unit 233 is equal to 63.5 µsecond. Therefore, the equalizer 235 is used to set the delaying time to 64 µsecond. That is, an operation that the delaying time obtained in the NTSC 1H delaying unit 233 is moreover increased by 0.5 µsecond in the equalizer 235 is easier than an operation that the delaying time in the PAL 2H delaying unit 232 is decreased to a half.

In the above configuration, a case that the line alternating property in the SECAM type chrominance signals is corrected in the VTR having the simple NTSC type video signal reproducing function is described. When a plurality of SECAM type chrominance signals output from the LPF 191 are fed to the chrominance signal correcting circuit 231, each of the SECAM type chrominance signals is delayed in the NTSC 1H delaying unit 233 and is processed in the equalizer 235 through the change-over switch 234 to produce a plurality of corrected chrominance signals, the corrected chrominance signals passing through the change-over switch 202 are demodulated in the SECAM chrominance signal processing unit 211, and the corrected chrominance signals passing through the switch 212 are fed to the Y/C multiplexing unit 105.

In cases where the PAL or NTSC type of chrominance signals are reproduced, the chrominance signals output from the PAL /NTSC transforming circuit 220 are fed to the Y/C multiplexing unit 105.

Because each chrominance signal is delayed in the BPF 198 by a prescribed delaying time, in cases where the prescribed delaying time is set to 0.5 µsecond, the equalizer 235 is not required. Also, as shown in Fig. 36, in cases where the PAL 2H delaying unit 232 is replaced with a series of PAL 1H delaying units 241 and 242 to obtain a magnetic reproducing apparatus 240, the equalizer 235 is not required in the magnetic reproducing apparatus 240. That is, in cases where the SECAM type chrominance signals are corrected in the magnetic reproducing apparatus 240, a series of SECAM type chrominance signals delayed in the PAL 1H delaying unit 241 is selected in a change-over switch 243. In case of the NTSC type simple reproducing operation (or a normal reproducing operation), a plurality of NTSC type chrominance signals delayed in the NTSC 1H delaying unit 233 are selected in the change-over switch 243, the NTSC type chrominance signals passing through the change-over switch 202 are processed in the second frequency changing unit 195, and the NTSC type chrominance signals passing through the switch 196 are processed in the PAL/NTSC transforming circuit 220 and are fed to the Y/C multiplexing unit 105 through the switch 212. Also, in case of a normal reproducing operation for the PAL type chrominance signals, the PAL type chrominance signals are delayed in the PAL 1H delaying units 241 and 242 and are processed in the second frequency changing unit 195 through the change-over switches 243 and 202, and the PAL type chrominance signals passing through the switch 196 are processed in the PAL/NTSC transforming circuit 220 and are fed to the Y/C multiplexing unit 105 through the switch 212. Therefore, the PAL 1H delaying units 241 and 242 are used as a comb-type filter.

Accordingly, in either a particular VTR in which a chrominance signal processing circuit used for the processing of the PAL type chrominance signals is provided or a type of VTR having the simple NTSC type video signal reproducing function in the particular VTR, because the SECAM type chrominance signals are corrected by using the delaying units functioning as a comb-type filter which are also used for the processing of the PAL or NTSC type chrominance signals, the line alternating property in the SECAM type chrominance signals can be corrected in the special reproducing operation by performing a simple control.

Having illustrated and described the principles of the present invention in a preferred embodiment thereof, it should be readily apparent to those skilled in the art that the invention can be modified in arrangement and detail without departing from such principles. We claim all modifications coming within the scope of the accompanying claims.

## Claims

1. A magnetic reproducing apparatus, comprising:
a rotational drum (DA) on which a magnetic tape (T) having a plurality of patterned tracks, which indicate a plurality of PAL type color television video signals recorded at a long time recording speed in a long time play mode, is wound, the long time recording speed being lower than a standard recording speed at which a normal recording of the PAL type color television video signals is performed;
a pair of rotational magnetic heads (H1 and H2), arranged on the rotational drum to be spaced at 180 degrees apart, for alternately scanning the magnetic tape, two scanning loci of the rotational magnetic heads being alternately formed on the magnetic tape;
scanning locus adjusting means (52 to 60, Lr, M1, RE1, PS1, M2, RE2 and PS2) for adjusting positions of the scanning loci drawn by the rotational magnetic heads on the magnetic tape to place each scanning locus on only one patterned track of the magnetic tape; and
signal reproducing means (3 and 4) for reproducing the PAL type color television video signals read out from the magnet tape through the rotational magnetic heads to reproduce an image from the PAL type color television video signals,
**characterized in that**
the magnetic reproducing apparatus further comprises phase inversion control means (6, 7 and 20) for controlling phases of a plurality of color difference signals R-Y included in the PAL type color television video signals which are read out from the magnetic tape running at a special reproducing speed higher than the long time recording speed set for the recording of the PAL type color television video signals in the long time play mode on condition that the phases of the color difference signals R-Y are alternately set to an inverted condition every horizontal scanning period even though one rotational magnetic head scanning the magnetic tape is changed to the other rotational magnetic head.

2. A magnetic reproducing apparatus according to claim 1 in which the scanning locus adjusting means comprises
inclination control means (45, 47, 49 to 53, 55-57, M1, RE1 and PS1) for controlling an inclination of a central axis of the rotational drum according to the special reproducing speed; and
drum position shifting means (46, 48, 54, 58-60, M2, RE2, PS2, Lr) for shifting the rotational drum from a standard position according to the special reproducing speed.

## Patentansprüche

1. Magnetwiedergabevorrichtung, mit:
einer Drehtrommel (DA), auf die ein Magnetband (T) mit mehreren gemusterten Spuren gewickelt ist, die mehrere, mit einer Langzeit-Aufzeichnungsgeschwindigkeit in einem Langzeit-Abspielmodus aufgezeichnete Farbfernseh-Videosignale vom PAL-Typ angeben, wobei die Langzeit-Aufzeichnungsgeschwindigkeit geringer als eine Standard-Aufzeichnungsgeschwindigkeit ist, mit der eine normale Aufzeichnung der Farbfernseh-Videosignale vom PAL-Typ durchgeführt wird;
einem Paar Drehmagnetköpfe (H1 und H2), die auf der Drehtrommel 180° beabstandet angeordnet sind, um das Magnetband abwechselnd zu scannen, wobei auf dem Magnetband abwechselnd zwei Scanortskurven der Drehmagnetköpfe gebildet werden;
Scanortskurven einstellenden Mitteln (52 bis 60, Lr, M1, RE1, PS1, M2, RE2 und PS2), um Positionen der Scanortskurven, die von den Drehmagnetköpfen auf dem Magnetband gezeichnet werden, so einzustellen, dass jede Scanortskurve auf nur einer gemusterten Spur des Magnetbandes platziert wird; und
Signalwiedergabemitteln (3 und 4), um die Farbfernseh-Videosignale vom PAL-Typ wiederzugeben, die vom Magnetband über die Drehmagnetköpfe ausgelesen werden, um ein Bild der Farbfemseh-Videosignale vom PAL-Typ wiederzugeben,
**dadurch gekennzeichnet,**
**dass** die Magnetwiedergabevorrichtung ferner Phaseninversionssteuerungsmittel (6, 7 und 20) aufweist, um Phasen mehrerer Farbdifferenzsignale R-Y zu steuern, die in den Farbfernseh-Videosignalen vom PAL-Typ enthalten sind, welche von dem Magnetband ausgelesen werden, das mit einer speziellen Wiedergabegeschwindigkeit läuft, die höher als die Langzeit-Aufzeichnungsgeschwindigkeit ist, die für die Aufzeichnung der Farbfernseh-Videosignale vom PAL-Typ im Langzeit-Abspielmodus eingestellt wurde, unter der Bedingung, dass die Phasen der Farbdifferenzsignale R-Y bei jeder horizontalen Scanperiode abwechselnd auf einen invertierten Zustand eingestellt werden, selbst wenn ein das Magnetband scannender Drehmagnetkopf auf den anderen Drehmagnetkopf umgeschaltet wird.

2. Magnetwiedergabevorrichtung nach Anspruch 1,
in welchem das Scanortskurven einstellende Mittel Neigungssteuerungsmittel (45, 47, 49 bis 53, 55 - 57, M1, RE1 und PS1), um eine Neigung einer Mittelachse der Drehtrommel gemäß der speziellen Wiedergabegeschwindigkeit zu steuern; und
Trommelpositionen verschiebende Mittel (46, 48, 54, 58 - 60, M1, RE2, PS2, Lr) aufweist, um die Drehtrommeln aus einer Standardposition gemäß der speziellen Wiedergabegeschwindigkeit zu verschieben.

## Revendications

1. Appareil de reproduction magnétique, comprenant :
un tambour rotatif (DA) sur lequel est enroulée une bande magnétique (T) comportant une pluralité de pistes structurées, qui indiquent une pluralité de signaux vidéo de télévision couleur de type PAL enregistrés avec une vitesse d'enregistrement longue durée dans un mode de lecture longue durée, la vitesse d'enregistrement longue durée étant inférieure à une vitesse d'enregistrement standard à laquelle est exécuté un enregistrement normal des signaux vidéo de télévision couleur de type PAL ;
une paire de têtes magnétiques rotatives (H1 et H2), placées sur le tambour rotatif de manière à être espacées de 180 degrés, pour balayer alternativement la bande magnétique, deux lieux géométriques de balayage des têtes magnétiques rotatives étant formés alternativement sur la bande magnétique ;
un moyen de réglage (52 à 60, Lr, M1, RE1, PS1, M2, RE2 et PS2) de lieu géométrique de balayage pour régler la position des lieux géométriques de balayage tracés par les têtes magnétiques rotatives sur la bande magnétique afin de placer chaque lieu géométrique de balayage sur une seule piste structurée de la bande magnétique ; et
un moyen de reproduction (3 et 4) de signaux pour reproduire les signaux vidéo de télévision couleur de type PAL lus sur la bande magnétique via les têtes magnétiques rotatives afin de reproduire une image à partir des signaux vidéo de télévision couleur de type PAL,
**caractérisé en ce que**
l'appareil de reproduction magnétique comprend en outre un moyen de commande d'inversion de phase (6, 7 et 20) pour commander les phases d'une pluralité de signaux R-Y de différence de couleur inclus dans les signaux vidéo de télévision couleur de type PAL qui sont lus sur la bande magnétique qui défile à une vitesse de reproduction spéciale, supérieure à la vitesse d'enregistrement longue durée établie pour l'enregistrement des signaux vidéo de télévision couleur de type PAL dans le mode de lecture longue durée, à condition que les phases des signaux R-Y de différence de couleur soient alternativement mises dans un état inversé à chaque période de balayage horizontal, même si l'on passe d'une tête magnétique rotative balayant la bande magnétique à l'autre.

2. Appareil de reproduction magnétique selon la revendication 1, dans lequel le moyen de réglage de lieu géométrique de balayage comprend :
un moyen de commande d'inclinaison (45, 47, 49 à 53, 55 à 57, M1, RE1 et PS1) pour commander une inclinaison de l'axe du tambour rotatif selon la vitesse de reproduction spéciale ; et
un moyen de décalage (46, 48, 54, 58 à 60, M2, RE2, PS2, Lr) de position de tambour pour décaler le tambour rotatif par rapport à une position standard selon la vitesse de reproduction spéciale.
